Europäisches Patentamt

European Patent Office

Office européen des brevets

(19)

(11) **EP 0 639 013 B1**

(12) **FASCICULE DE BREVET EUROPEEN**

(45) Date de publication et mention
de la délivrance du brevet:
**02.12.1998  Bulletin 1998/49**

(51) Int Cl.⁶: **H04L 12/46**

(21) Numéro de dépôt: **94401584.1**

(22) Date de dépôt: **08.07.1994**

(54) **Procédé et dispositif d'analyse d'informations contenues dans des structures de données**

Verfahren und Vorrichtung zur Auswertung von Datenstrukturinformationen

Method and device for the analysis of data structure information

(84) Etats contractants désignés:
**DE GB**

(30) Priorité:  **12.07.1993  FR 9308558**

(43) Date de publication de la demande:
**15.02.1995   Bulletin 1995/07**

(73) Titulaire: **FRANCE TELECOM**
**75015 Paris (FR)**

(72) Inventeurs:
 • **Duret, Christian**
  **F-92320 Chatillon (FR)**
 • **Pelamourgues, Lionel**
  **F-75015 Paris (FR)**

(74) Mandataire: **Dubois-Chabert, Guy et al**
**Société de Protection des Inventions**
**25, rue de Ponthieu**
**75008 Paris (FR)**

(56) Documents cités:
**EP-A- 0 556 148**

 • **IEEE INFOCOM, CONFERENCE ON COMPUTER COMMUNICATIONS, vol.2, 7 Avril 1991, BAL HARBOUR, US pages 515 - 524 T.B.PEI ET AL 'VLSI IMPLEMENTATION OF ROUTING TABLES: TRIES AND CAMS'**
 • **IEE PROCEEDINGS E. COMPUTERS & DIGITAL TECHNIQUES, vol.135, no.1, Janvier 1988, STEVENAGE GB pages 55 - 59 PWOLSTENHOLME 'FILTERING OF NETWORK ADDRESSES IN REAL TIME BY SEQUENTIAL DECODING'**

## Description

Domaine technique

La présente invention concerne un procédé et un dispositif, du type traducteur, d'analyse de structures de données permettant de fournir au vol les informations nécessaires à l'acheminement de telles structures de données à haut débit. Ce dispositif permet aussi de fournir des éléments d'information sur les traitements complémentaires à réaliser.

Etat de la technique antérieure

La fonction de traduction en commutation électronique a pour but de fournir les informations nécessaires à l'acheminement et à la taxation des appels présentés à l'autocommutation. Elle prend en compte les notions de plans de numérotations régional, national et international, ainsi que l'utilisation du plan de numérotation pour l'accès aux services complémentaires. Réalisée essentiellement par l'intermédiaire de tables interprétées par des programmes d'analyses, elle a donc, en commutation électronique, une puissance et une souplesse qui permettent d'augmenter ses possibilités même pour la traduction des numéros appartenant aux plans de numérotation habituels.

Les problèmes de traduction sont bien connus en commutation téléphonique :

- quel est le numéro du demandeur, connaissant le joncteur sur lequel se présente l'appel ?
- quelles sont les discriminations du demandeur ?
- en fonction du numéro du demandé, sur quel faisceau de circuits acheminer l'appel ?
- sur le faisceau choisi, quel type de signalisation ?
- quel mode de taxation en fonction du couple N° demandeur, N° demandé ?
- sur quel joncteur présenter l'appel connaissant le N° du demandé ?
- ...

Ces problèmes sont exposés notamment dans l'ouvrage intitulé "La commutation électronique" de Grinsec (collection scientifique et technique des télécommunications, tome 2, pages 128-142). Les opérations correspondantes sont complexes, avec un grand nombre de variantes, en temps réel mais à la vitesse de la numérotation téléphonique. Les algorithmes utilisés, par exemple les tables d'analyse à structure pyramidale sont cependant très rapides et proches de ce qui sera décrit dans la suite.

Les communications de machine à machine en mode "connecté" posent le même genre de problèmes : les commutateurs du réseau TRANSPAC ont des mécanismes analogues à ceux des commutateurs téléphoniques pour établir un circuit virtuel. Tous les paquets d'information du même circuit sont ensuite acheminés de la même manière. La durée de vie d'un circuit virtuel est en moyenne beaucoup plus longue que celui d'une communication téléphonique.

Les communications de machine à machine en mode "sans connexion" sont naturellement assurées par des réseaux locaux informatiques dans lesquels le réseau est un simple média partagé et l'intelligence répartie dans les terminaux ou leurs attachements au réseau. La "connexion" (usage exclusif du média partagé) entre les deux machines ne reste établie que pendant la durée de l'unité de données échangée: de quelques octets à quelques milliers d'octets. L'offre d'un tel service sur un grand réseau (régional ou national) partiellement maillé nécessite aussi des mécanismes de traduction à chaque noeud du réseau mais à une échelle de temps considérablement plus réduite que précédemment : au pire cas, les opérations de traduction ne doivent pas durer plus longtemps que le temps minimum séparant la réception de deux unités de données. A titre d'exemple: un réseau Ethernet peut transmettre environ 15000 trames par seconde et un réseau FDDI ("Fiber Distributed Digital Interface") jusqu'à 500000.

Ces problèmes sont exposés notamment dans l'ouvrage intitulé "Réseaux, architectures, protocoles, applications" d'Andrew Tanenbaum (Inter Editions, 1990).

A chaque noeud d'un réseau offrant des services sans connexion on retrouve de manière simplifiée les mêmes fonctions résumées dans le tableau I donné en fin de description, appelées par analogie avec la commutation téléphonique fonctions de "traduction".

Au niveau physique (par exemple ATM ou "Asynchronous Transfer Mode") il s'agit pour chaque cellule entrante de déterminer en fonction de son identificateur de circuit virtuel {VC, VP} si elle peut être commutée telle que vers un ou plusieurs autres circuits virtuels, si elle est destinée à la commande du commutateur ATM parce qu'elle contient des informations de signalisation ou d'administration qui lui sont destinées ou enfin si le circuit virtuel supporte un service sans connexion, la passer au niveau MAC ("Medium Access Control") ou couche d'accès physique.

Au niveau MAC, selon l'adresse de destination dans l'en-tête, on peut déduire si la trame MAC peut être routée telle que sur un circuit virtuel sortant (commutation de trames MAC), si elle est destinée à la commande du pont ou si un traitement doit être effectué au niveau réseau après traitement de l'en-tête la couche liaison de données LLC (ou "Logical Link Control").

Le traitement du niveau LLC permet de reconnaître si la trame contient un niveau réseau mis en oeuvre (par exemple IP ou "Internet Protocol") ou si elle est destinée à la commande du routeur.

Au niveau réseau, selon l'adresse de destination dans l'en-tête, on peut déduire si la trame peut être routée telle que vers une nouvelle adresse MAC de destination, sur un circuit virtuel sortant ou si elle est destinée à la commande du routeur.

Au dessus du niveau physique, chaque unité de données échangée est accompagnée de son adresse de source (SA) et de destination (DA). L'analyse de la destination seule fournit l'acheminement et celle du couple {source, destination} une partie des informations nécessaires à la taxation ou des restrictions par exemple pour réaliser un groupe fermé d'usagers. L'acheminement est à effectuer en chaque noeud du réseau, la taxation en un seul et les discriminations du groupe fermé d'usager en totalité ou en partie aux noeuds de source et de destination.

L'analyse de tout ou partie des adresses SA et DA est à effectuer en temps réel. La mise à jour des tables de traduction a des contraintes de temps plus faibles : elle peut être effectuée par l'administration du réseau (par exemple pour le groupe fermé d'usagers) à un rythme très lent (minute) ou au rythme d'échange de trames de mise à jour (seconde) si des protocoles de routage dynamique sont mis en oeuvre dans le réseau comme le "source routing" ou le "spanning tree".

La longueur des adresses à analyser peut être variable.

Les longueurs usuelles sont les suivantes :

- 16 ou 48 bits pour les adresses MAC des réseaux FDDI, Ethernet, Token ring ou Token bus ;
- 32 bits pour le protocole internet (IP) ;
- 60 bits (recommandation CCITT E.164) ;
- 80 bits pour le protocole XTP ;
- jusqu'à 160 bits pour l'adresse de NSAP ("Network Service Access Point") de l'ISO.

Dans ce dernier cas, l'adresse est préfixée par sa longueur.

La profondeur d'analyse peut être variable, par exemple :

- complète pour les adresses MAC 802.x en mode administration publique;
- partielle pour les adresses IP-DoD ("Internet Protocol-Department of Defense") qui peuvent avoir une structure hiérarchisée (réseau, sous réseau dans le réseau, machine hôte dans le sous réseau).

Dans tous les cas, les fonctions de traduction doivent fournir à partir d'un nombre réduit d'adresses actives dans un espace d'adressage très grand les informations nécessaires à l'acheminement d'une unité de données. A titre d'exemple, un pont FDDI doit pouvoir reconnaître quelques milliers d'adresses à un instant donné sur les $2^{48}$ de l'espace d'adressage possible.

Dans le cadre des services sans connexions, en dehors de l'acheminement des unités de données, on retrouve des fonctions analogues par exemple pour la taxation : faire progresser un compteur lié à une adresse source d'un montant dépendant entre autres facteurs du couple adresse source, adresse destination ou pour diverses observations de trafic: recopier et acheminer les trames issues d'une source donnée vers une machine d'observation.

Les services de données en mode connecté font aussi appel à des fonctions de traduction au sein d'un même niveau, par exemple de DLCI ("Data Link Connexion Identifier"), entrant vers {DLCI port de sortie} dans les noeuds d'un réseau offrant un service de relayage de trames ou encore de DLCI entrant vers {VC, VP, port de sortie} dans les noeuds d'un réseau offrant ce même service mais basé sur une infrastructure ATM.

Les opérations de base à effectuer sur les tables de traduction sont la recherche et la mise à jour. La recherche doit être effectuée le plus rapidement possible, au rythme des trames entrantes. C'est l'optimisation de la fonction de recherche qui va donc déterminer la méthode de gestion de la table de traduction.

Il existe un grand nombre de méthodes de recherche et d'organisations de tables :

**Tabulation**

La table contient autant d'entrées qu'il y a d'adresses dans l'espace d'adressage. Pour chaque entrée, il faut stocker l'information associée à l'adresse (existence, paramètres de routage...). La recherche est à la fois triviale et ultra rapide ainsi que la mise à jour. Cette solution n'est applicable que si le rapport entre le nombre d'adresses actives et le nombre d'adresses de l'espace d'adressage n'est pas trop petit.

**Recherche séquentielle**

Les adresses actives et les informations associées sont entassées dans une table avec autant d'entrées que d'adresses actives. La recherche s'effectue en balayant la table. Cette structure est la plus compacte. La mise à jour et la recherche sont triviales. Son seul inconvénient est un temps de recherche trop long: le nombre de tests est au pire cas égal au nombre d'entrées.

**Recherche par dichotomie (recherche binaire)**

Cette méthode n'est applicable que s'il existe une relation d'ordre entre les adresses actives. La recherche se fait en déterminant si l'adresse appartient à la première ou à la seconde moitié de la table en la comparant avec l'adresse active stockée à la moitié de la table. Ce processus est réitéré sur la moitié de table obtenue jusqu'à coïncidence. Le nombre de comparaisons est au plus de $Log_2M$ où M est le nombre d'adresses actives. La mise à jour est complexe, car elle nécessite le réarrangement de toute la table.

**Recherche par "Hash Coding" (accès calculé)**

Une entrée dans la table des adresses actives est déterminée par le calcul d'une fonction d'accès appropriée sur l'adresse à rechercher. A partir de l'entrée obtenue, on recherche séquentiellement si l'adresse est présente dans l'ensemble des adresses actives ayant la même fonction d'accès.

La fonction d'accès doit permettre d'accéder à toutes les entrées de la table avec une égale probabilité pour que la méthode soit efficace. Le nombre moyen de comparaisons par recherche peut être voisin de 1.

**Mémoire associative (ou "Content adressable memory" ou "CAM")**

La comparaison avec l'adresse à rechercher est faite en parallèle sur l'ensemble des adresses actives. La réalisation est matérielle. A chaque registre contenant une adresse active est associé un comparateur. Le temps pris pour déterminer si l'adresse recherchée existe se chiffre en dizaines de ns. L'accès à une information associée est possible par une extension du registre d'adresse active. Des registres supplémentaires peuvent contenir des masques pour exclure de la comparaison des champs d'adresse. Le masque est global : le type ou la profondeur d'analyse doit être connu avant la recherche.

Les circuits disponibles actuellement permettent de stocker 256 adresses de 48 bits avec un temps d'accès de 70 ns ou 1024 adresses de 48 bits avec accès à une information associée de 16 bits en 270 ns

**Mise en oeuvre**

Les machines actuelles réalisent généralement un traitement séquentiel sans vectorisation. Une partie notable de la puissance de calcul de leur unité de traitement est consacrée à la détermination de la tâche à effectuer et une autre partie à des tâches identiques pour la plupart des trames reçues comme par exemple :

- la consultation des tables d'adresses ou d'identificateurs pour en reconnaître l'existence et/ou en déduire une information associée et/ou la tâche à effectuer;
- le calcul de somme de contrôle (FCS ou "checksum" (somme de contrôle), CRC ou "Cyclic Redundancy Code") ;
- opération sur divers champs, ...

L'invention a pour objet un procédé d'analyse permettant le regroupement dans une même mémoire de toutes les informations dynamiques ou paramétrables, le traitement du cas du routage par la source, le traitement dans un même dispositif de plusieurs niveaux de protocole ainsi que pour un même niveau de protocoles différents.

Elle a également pour objet un dispositif de type traducteur rapide, capable de fournir au vol les informations nécessaires à l'acheminement de données de haut débit ou de fournir des éléments d'information sur les traitements complémentaires à réaliser.

Exposé de l'invention

L'invention concerne un procédé d'analyse, en tout ou partie, d'informations contenues dans des structures de données pour fournir à un système externe les informations nécessaires à l'acheminement desdites structures de données ou à leur traitement par un système externe intelligent, dans lequel on analyse des champs significatifs desdites structures de données, notamment les adresses de source ou de destination, en utilisant le principe des tables de traduction par indirections successives dans un tableau à deux dimensions TRIE (i, j), chaque ligne du tableau constituant un registre à $2^k$ cellules où k est la longueur de la tranche adressée, caractérisé en ce que la recherche dans les tables de traduction est effectuée au rythme de l'information entrante, par tranches de structures de données, de manière à débuter la recherche avant d'avoir reçu complètement la structure de données, le contenu d'une cellule permettant, après une durée égale à quelques tranches de données, d'adresser le registre suivant, ou d'indiquer si la recherche a échoué, ou de fournir une information de fonctionnement pour un système externe intelligent, ou une valeur, notamment pour l'acheminement, associée au contenu de la structure de donnée active, en ce que l'on fournit les informations à un automate associé, et en ce que l'on traite à la fois les informations de contrôle du protocole et les informations d'adressage du protocole.

Dans ce procédé, on peut faire plusieurs analyses successives, une même table pouvant être utilisée pour plusieurs types de recherche en utilisant des chemins différents, par exemple en commençant les recherches par des registres portiers différents.

On sait exclure de la recherche toute partie connexe ou non de la structure de donnée, sans contrainte d'alignement du champ ou d'une sous-partie de la partie testée sur une frontière de tranche, et sans rompre le processus de recherche.

Dans le procédé de l'invention, les structures de donnée contenant une information de routage par la source peuvent être acheminées.

La trame routée par la source décrite notamment dans la norme ISO 10038 Add 2 comprend un champ "routing information" composé de plusieurs champs dont un champ RT indiquant le type de routage, et un champ LTH indiquant la longueur en octets du champ "routing information", et d'une suite de désignateurs de route.

L'analyse des champs RT et LTH est obtenue par consultation de la mémoire TRIE qui fournit les informations suivantes :

- une fonction pour les trames du type ARE ou STE qui servent aux systèmes d'extrémité à construire leurs propres tables de routage ;
- une erreur si le champ LTH a une valeur incorrecte ;
- la durée précalculée en tranches si la trame est du type SRF.

L'information d'acheminement est obtenue par analyse de la zone "désignateurs de route" qui décrit le chemin que doit suivre une trame, le chemin étant décrit par la succession des liens empruntés (identificateurs de LAN "LANid") et des noeuds traversés (identificateurs de ponts "BN").

L'acheminement est établi par reconnaissance d'une séquence particulière (LANid, BN, LANid) dans le champ RD, la reconnaissance s'effectuant de la manière suivante :

- tant qu'un premier identificateur de LAN n'a pas été reconnu, on ignore l'identificateur de pont et on recommence la recherche ;
- dès qu'un identificateur de LAN a été reconnu, l'acheminement est obtenu après analyse de l'identificateur de pont et de l'identificateur de LAN qui suivent ;

la condition "tant que" étant obtenue par une programmation adaptée de la mémoire TRIE : un échec lors de l'analyse d'une des tranches d'un LANid faisant pointer vers des registres fictifs pointant soit vers le registre fictif suivant, soit pour le dernier vers le portier pour recommencer la recherche.

L'acheminement, qui dépend de la direction de la trame, est obtenu à la fin de l'analyse par indirection sur le résultat intermédiaire stocké quand la séquence a été reconnue et par indexation par le bit de direction enregistré au préalable.

L'invention permet de disposer, en temps réel à la vitesse des réseaux locaux actuels les plus rapides (200 Mbit/s...) en faisant appel aux technologies courantes ou en temps différé en étalant dans la durée le traitement pour servir plusieurs réseaux locaux à grand débit, d'informations permettant la détermination d'éléments d'information associés liés au filtrage, au routage, à la sécurité, au comptage, ... ainsi qu'à la vérification de certains éléments essentiels pour l'identification du type de traitement à faire sur une trame (somme de contrôle, contraintes sur différents champs, ...) en temps caché s'il est proprement inséré dans le système l'utilisant.

Il procure ainsi la compréhension a priori, plus ou moins détaillée, de la structure de la trame reçue. Ainsi, une détermination plus fine (avant traitement par l'unité de traitement proprement dite) permet de diriger la trame vers la fonction de traitement nécessaire. Il est alors possible de séparer les fonctions dont la réalisation est critique du point de vue temporel de celle qui le sont le moins sans pénaliser les premières.

L'invention concerne également un dispositif pour l'analyse d'informations contenues dans des structures de données pour fournir à un système externe les informations nécessaires à l'acheminement desdites structures de données ou à leur traitement par un système externe intelligent, caractérisé en ce qu'il comprend :

- un automate;
- une mémoire RAM ;

- un module de commande d'écriture-lecture permettant d'écrire et de lire dans la mémoire RAM, de participer à l'arbitrage RAM-automate, et éventuellement de paramétrer l'automate, différentes sorties de l'automate correspondant aux résultats intermédiaires, au portier, à la direction et à la tranche analysée, ainsi que les sorties adresse du module d'écriture-lecture sont reliées à la mémoire RAM au travers d'un chemin de donnée.

D'autres sorties de l'automate sont reliées à un module résultat qui est pour partie lu dans la mémoire et pour partie dans l'automate et délivre des signaux correspondant à la valeur, au type d'analyse, à l'erreur, à la présence valeurs, à la présence fonction et à la présence résultat.

Les accès données du module d'écriture-lecture et de l'automate sont reliés à la mémoire RAM.

Ce dispositif comprend également un module de vérification de "checksum".

Dans une première variante adaptée au protocole IP-DOD, ce module de vérification de checksum comprend un additionneur qui reçoit sur huit premières entrées l'octet à analyser, ses huit sorties étant reliées à un premier registre (A) et à un second registre (B) dont les sorties respectives sont reliées aux deux entrées 0 et 1 d'un multiplexeur qui a ses sorties reliées aux secondes entrées de l'additionneur. La sortie retenue de l'additionneur est reliée à l'entrée retenue de celui-ci au travers d'un troisième registre qui reçoit une horloge $\phi$. Le premier registre (A) reçoit une horloge $\phi$A, le second registre (B) et le multiplexeur reçoivent une horloge $\phi$B.

Dans une seconde variante adaptée au protocole ISO-CLNP, ce module de vérification de "checksum" comprend un premier additionneur qui reçoit sur ses premières entrées l'octet à analyser, les sorties de cet additionneur étant entrées sur un premier registre (Co) dont les sorties sont envoyées sur les secondes entrées du premier additionneur et aux premières entrées d'un second additionneur. Les sorties du second additionneur sont entrées sur un second registre (C1) dont les sorties sont reliées aux secondes entrées du second additionneur. La sortie retenue du premier additionneur est reliée à la première entrée retenue du premier et du second additionneur au travers d'un troisième registre, et la sortie retenue du second additionneur est reliée à la seconde entrée retenue de ce second additionneur au travers d'un quatrième registre ; les quatre registre recevant une même horloge $\phi$.

Ce dispositif peut être utilisé dans une application à un commutateur de structure de données ou à un pont routeur présentant notamment une interface FDDI.

Le dispositif de l'invention se compose de plusieurs parties :

- une partie distribuant les tâches à accomplir, chaque tâche étant minimale par un processus s'apparentant à une vectorisation des travaux ;
- la réalisation des tâches les plus fréquentes comme la consultation des tables d'adresses, le calcul de CRC et de FCS, ...

Ainsi, le temps global apparent de traitement est fortement réduit, la puissance nécessaire aux tâches ultérieures est moins grande, chacune de ces dernières étant plus faiblement couplées que dans la solution précédente.

Selon le compromis matériel/logiciel retenu et les performances souhaitées, certaines tâches peuvent être réalisées dans le dispositif.

Dans le cadre de la technologie actuellement disponible, le dispositif de l'invention est applicable à la construction de façon économique de commutateur de paquets (et plus particulièrement de ponts, de routeurs, de pont/routeurs ou de commutateurs routeurs) capable de traiter en terme de puissance l'ensemble des informations qui lui serait transmis y compris dans le cas de réseaux locaux à très hauts débits (FDDI, ATM, ...) ou de réseau WAN "Wide Area Network") de forts débits (SDH ou "Synchronous Digital Hierarchy", ATM,...).

Ce dispositif présente de nombreux avantages :

- il utilise une méthode de recherche employée en téléphonie ou en informatique aux cas des commutateurs de paquets (en particulier au cas des ponts, des routeurs et des ponts/routeurs, ...) quels que soient leurs modes de fonctionnement (mode sans connexion, mode avec connexion, autre mode, ...) simultanés ou non, quels que soient les protocoles utilisés, la nouveauté réside dans l'application à ce domaine ;
- il permet de rassembler dans un même dispositif la plupart des fonctions critiques et/ou répétitives d'analyse puis de filtrage, routage, sécurité, ... de façon synchrone ou asynchrone par rapport au flot de données (y compris le temps réel) ;
- il permet la vectorisation des traitements à effectuer par la suite ;
- il permet de dégrossir les tâches ultérieures à effectuer en les précisant éventuellement en temps caché pendant la réception du flot de données ;
- il permet de réaliser des dispositifs autres que du type "Store and Forward" de façon économique et performante.

Brève description des dessins

- La figure 1 représente un exemple de mémoire TRIE ;
- les figures 2a et 2b représentent respectivement les champs exclus de la recherche et l'attente d'une valeur particulière;
- les figures 3a, 3b et 3c illustrent le dimensionnement de la mémoire ;
- les figures 4a, 4b et 4c illustrent le temps de traduction ;
- les figures 5a, 5b, 5c, 5d et 5e et 6a et 6b illustrent différents champs adresses de trames FDDI ;
- la figure 7 représente un exemple de réseau ;
- la figure 8 illustre une recherche dans le cas de routage par la source ;
- les figures 9a, 9b, 9c et 9d illustrent différents champs adresses de trames MAC ;
- la figure 10 illustre un en-tête IP-DOD ;
- la figure 11 illustre un en-tête ISO-CLNP ;
- les figures 12a et 12b illustrent un automate d'analyse ;
- les figures 13a et 13b représentent un format du contenu de la mémoire TRIE ;
- les figures 14a, 14b et 14c illustrent un calcul des sommes de contrôle ;
- la figure 15 représente l'architecture matérielle du traducteur de l'invention.

Exposé détaillé de modes de réalisation

A l'exception des mémoires associatives, les méthodes de gestion décrites précédemment ne sont pas applicables si l'on se fixe pour objectif la recherche d'une adresse dans un délai de l'ordre de la centaine de ns. La mémoire "TRIE" proposée par R. de la Briandais ou E. Fredkin à la fin des années 50 constitue une solution intéressante. Des mémoires de ce type sont décrites notamment dans les articles intitulés "trie Memory" de E. Fredkin ("Communications of the ACM, vol. 3, n° 9, Septembre 1960) et "VLSI Implementation of routing tables : TRIES and CAMS" de Tong-Bi Pei et Charles Zukowsky (10th annual joint conference of the IEEE Computer and Communication Societies Bal Harbour, FL, USA Avril 1991). Les avantages de la mémoire TRIE sont :

- un temps d'accès rapide et constant ;
- une recherche par tranche d'adresse ;
- la possibilité de traiter des longueurs d'adresse différentes ;
- une mise à jour relativement facile.

La recherche par tranche d'adresse permet de débuter le processus avant même d'avoir reçu complètement l'adresse.

Le seul inconvénient de la mémoire "TRIE" est sa relative inefficacité en espace mémoire (cependant comparable avec celle du "Hash coding" si l'on souhaite un nombre de comparaisons très proche de 1.

L'évaluation de la surface de silicium entre les approches CAM et TRIE montre un avantage pour les premières mais les mémoires CAM ne bénéficient pas de la somme de travaux faits sur les mémoires RAM ("Random Access Memory") ni des mêmes volumes de fabrication. De plus, la mémoire TRIE est beaucoup mieux adaptée au traitement d'adresses de longueur variable ou plus généralement à la reconnaissance de motifs quelconques.

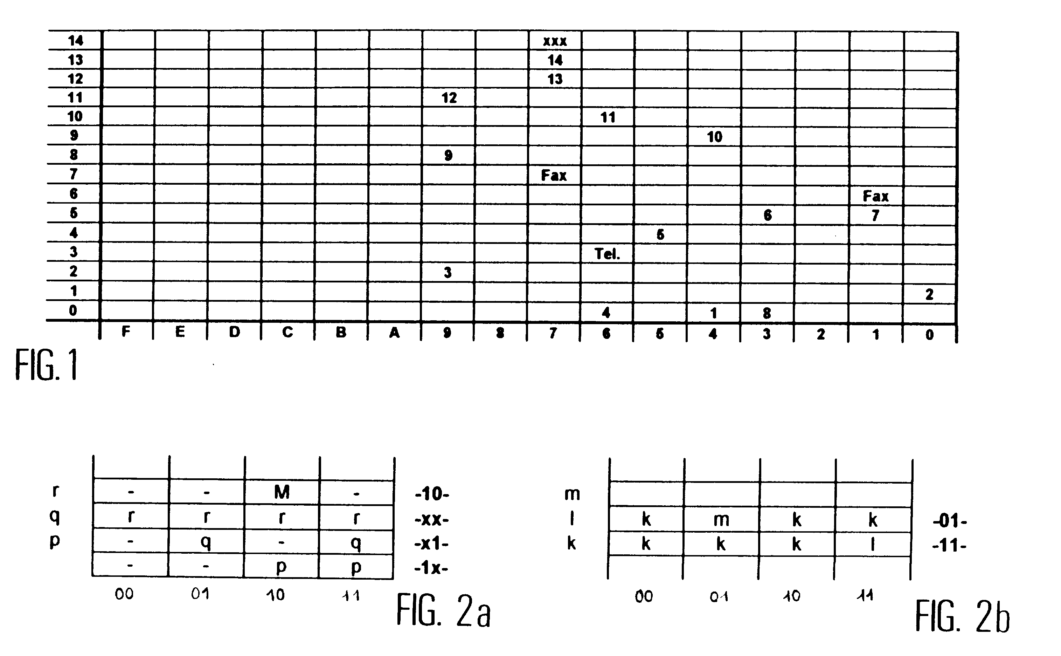

La recherche est effectuée par indirections successives dans un tableau à deux dimensions TRIE[i,j] comme représenté sur la figure 1. Chaque ligne du tableau constitue un "registre" de $2^K$ "cellules" (selon la terminologie proposée par E. Fredkin) où K est la longueur de la tranche d'adresse testée.

Le contenu d'une cellule permet d'adresser le registre suivant ou d'indiquer en pointant sur le premier registre ou "portier" si la recherche a échoué. A chaque tranche de K bits $A_l$ d'adresse reçue, le contenu de la cellule TRIE[$A_l$,p] fournit l'adresse du registre suivant : p'. La dernière lecture si elle est non nulle fournit l'information associée à l'adresse active.

La profondeur d'analyse peut être variable et être indiquée dans la table elle-même si le contenu de la cellule inclut un bit supplémentaire signifiant que le résultat a été obtenu.

Une même table peut être utilisée pour plusieurs types de recherche simplement en commençant la recherche par des registres portiers différents. La mémoire et le processus de recherche restent identiques pour des protocoles et des types d'adresse différents ainsi que le processus de mise à jour de la table.

La figure 1 représente une mémoire TRIE dans laquelle sont stockées les adresses et les informations associées suivantes :

40 96        Tel.(Téléphone)
65 31        Fax (Téléfax)

65 17 Fax (Téléfax)

39 46 97 77 xxx (autre)

Une tranche entière (ou un champ dans une tranche) peuvent être exclu de la recherche ("don't care"). La figure 2.a donne un exemple de contenu de la mémoire dans le cas de tranches de deux bits dans lesquelles on veut reconnaître le motif : -1x-x1-xx-10.

La recherche peut ne démarrer (ou ne reprendre) qu'après reconnaissance d'une valeur particulière, par exemple -11-01- dans la figure 2.b.

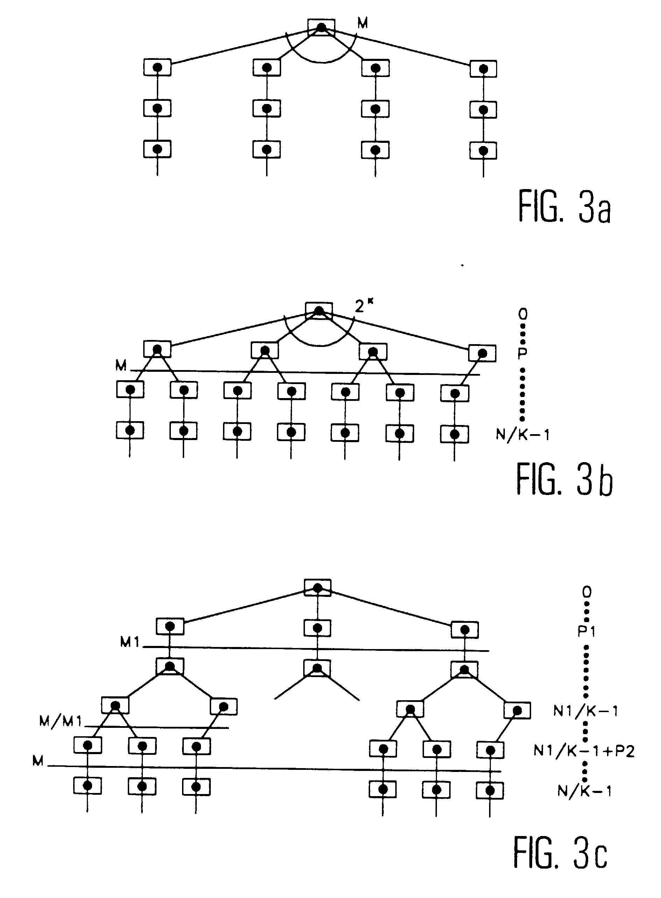

Les figures 3a, 3b et 3c illustrent le dimensionnement de la mémoire, soit :

- figure 3a : le pire cas quand $M < 2^K$ ;
- figure 3b : le pire cas quand $M > 2^K$ ;
- figure 3c : les adresses MAC publiquement administrées.

Les champs communs de poids fort ne sont stockés qu'une fois. Le pire cas est rencontré quand les adresses stockées n'ont aucun champ en commun à partir du poids fort (figure 3a).

Soit :

- M le nombre total d'adresses à stocker;
- N la longueur de l'adresse ;
- K la longueur de la tranche d'adresse.

Une adresse occupe N/K registres. Le premier (le portier) est commun à toutes les adresses. Le nombre total R de registres dans le pire cas est donc :

$$R = 1 + M.(N/K-1)$$

Le nombre C de cellules par registre est :

$$C = 2^K$$

Le contenu d'une cellule doit pouvoir adresser l'ensemble des registres. La longueur du mot est donc l'entier B tel que :

$$B \geq Log_2 R$$

A titre d'exemple, le stockage de 10000 adresses 802.x de 48 bits demande dans cette hypothèse de pire cas une mémoire de :

$940.10^3$ mots de 19 bits pour des tranches de 1 bit;

$920.10^3$ mots de 18 bits pour des tranches de 2 bits ;

$1,76.10^6$ mots de 17 bits pour des tranches de 4 bits ;

$12,8.10^6$ mots de 16 bits pour des tranches de 8 bits.

Soit P l'entier tel que

$$2^{PK} \leq M < 2^{(P+1)K}$$

ou encore :

$$P = Partie\_entière\left(\frac{Log_2 M}{K}\right)$$

Au pire cas, si M est plus grand que $2^K$, $2^{2K}$, ... les registres des niveaux 0 à P sont en nombre inférieur à M (Figure 3.b). Une valeur moins pessimiste du pire cas peut donc s'écrire :

$$R = \sum_{i=0}^{i=p} 2^{i.k} + M\left(\frac{N}{K} - P - 1\right)$$

ou encore

$$R = \frac{2^{k(p+1)} - 1}{2^k - 1} + M\left(\frac{N}{K} - P - 1\right)$$

Selon cette hypothèse, moins grossière, le volume mémoire nécessaire au stockage de 10000 adresses MAC se réduit à :

0,348    $10^6$ mots pour des tranches de 1 bit
0,725    $10^6$ mots pour des tranches de 2 bits
1,35     $10^6$ mots pour des tranches de 4 bits
10,3     $10^6$ mots pour des tranches de 8 bits.

Le nombre d'adresses stockables peut être beaucoup plus important. Par exemple les adresses 802.x de 48 bits "administrées publiquement" ont dans leurs 24 bits de poids forts un identifiant du type d'adresse et du constructeur (IBM, DEC, HP,...). Le nombre d'identifiants différents dans l'ensemble des adresses actives à un instant donné est en nombre réduit et le volume de mémoire nécessaire se réduit encore. La figure 2.c représente ce cas dans l'hypothèse la plus défavorable ou les M adresses à stocker sont réparties uniformément entre M1 identifiants différents de longueur N1 bits dans les champs d'adresses de poids forts.
Soit P1 et P2 les entiers tels que :

$$P_1 = Partie\_entière\left(\frac{Log_2 M_1}{K}\right)$$

$$P_2 = Partie\_entière\left(\frac{Log_2 \frac{M}{M_1}}{K}\right)$$

Le nombre de registres nécessaires devient:

$$R = \frac{2^{k(p_1-1)}-1}{2^k-1} + M_1\left(\frac{N_1}{K}-P_1-1\right) + M_1\left\{2^{k(p2+1)}-1}{2^k-1}+\frac{M}{M_1}\left(\frac{N-N_2}{K}-P_2-1\right)\right\}$$

Dans le cas ou le nombre d'identifiants est limité à 20, le stockage de 10000 adresses MAC se réduit à 0,551 $10^6$ mots pour une largeur de tranche de 4 bits.

La vitesse exigée ainsi que les performances de la mémoire interviennent aussi dans le choix de la largeur de la tranche d'adresse traitée.

Soit :

- Tcy le temps du cycle de lecture de la mémoire TRIE;
- D le débit binaire auquel arrive l'adresse à analyser.

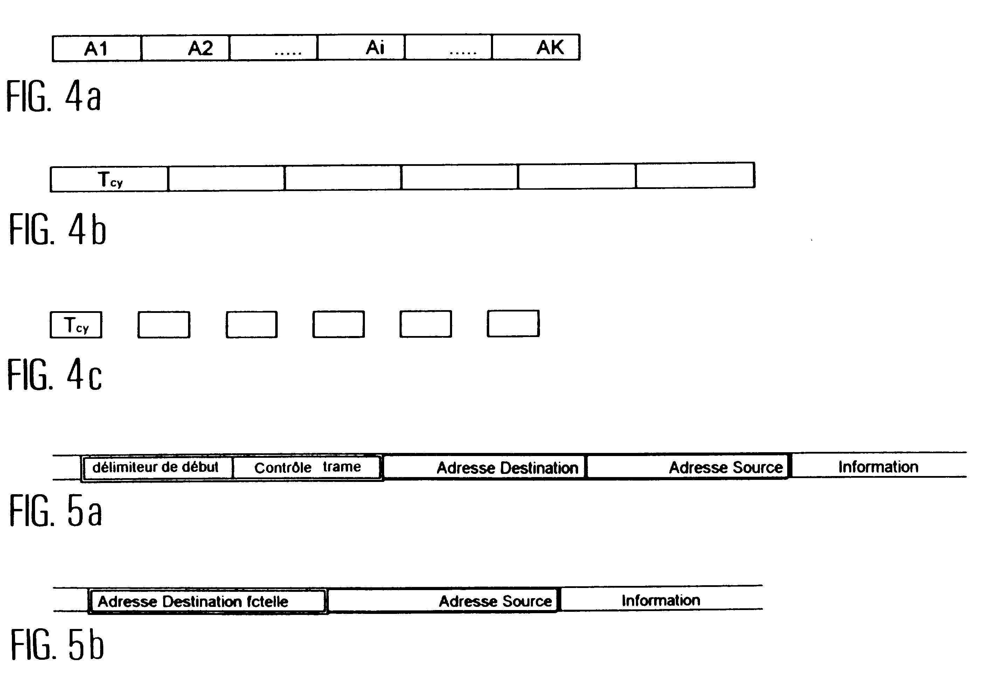

La figure 4 illustre le temps de traduction, soit :

- figure 4a : adresse à analyser;
- figure 4b : cycle mémoire plus long que la tranche d'adresse;
- figure 4c : cycle mémoire plus court que la tranche d'adresse.

La traduction demande au plus N/K cycles. Elle ne peut débuter qu'après réception de la première tranche et ne finir qu'un cycle après réception de la dernière comme représenté sur la figure 4. Le temps d'analyse Tan est donc :

$$Tan = K/D + max[ (N/K-1)Tcy, (N-K)/D ] + Tcy$$

Le temps d'accès Tac entre l'arrivée du demier bit de l'adresse à analyser et le résultat s'en déduit:

$$Tac = Tcy \qquad si\ Tcy \leq N/K/D$$

$$Tac = (N/K).Tcy - (N-K)/D \qquad si\ Tcy > N/K/D$$

Le deuxième cas (figure 4.c) est le plus favorable en termes de vitesse et de simplicité : il n'est pas nécessaire de mémoriser des tranches intermédiaires ni de réaliser un changement de vitesse. Dans ces conditions, avec les performances actuelles de mémoires RAM statiques rapides (temps d'accès de 20 à 30 ns), un temps de cycle de 40 ns et des tranches d'adresses de 4 bits constituent un bon compromis pour traiter un débit de 100 Mbit/s.

On va à présent considérer une application à un pont-routeur FDDI.

L'utilisation d'une organisation de mémoire du type "TRIE" associée avec une logique câblée permet de calculer "au vol" les informations nécessaires à l'acheminement d'une trame de niveau MAC ou de niveau réseau, ou bien si la trame ne peut être acheminée directement de faciliter les traitements à effectuer par le processeur d'un pont-routeur.

Un niveau MAC FDDI selon la norme ISO 9313 a été choisi comme exemple pour les raisons suivantes :

- le débit est élevé (100 Mbit/s), rendant difficile la mise en oeuvre de techniques logicielles ;
- les traitements à effectuer au niveau MAC (pont) ou réseau (routeur) sont connus.

La description des opérations à effectuer et la façon dont les problèmes ont été résolus est évidemment de portée plus générale et d'autres applications peuvent être envisagées telles que :

- la traduction des identificateurs de VPNC dans des commutateurs ATM ;
- la traduction des identificateurs de connexions "DLCI" dans des commutateurs à relayage de trames ;
- le traitement d'autres protocoles de niveau MAC (CLNAP, (CCITT 1.364), IEEE, 802.6, ...), de niveau réseau ou même de niveau transport ;
- la taxation ou les observations de trafic...

**En-tête MAC FDDI**

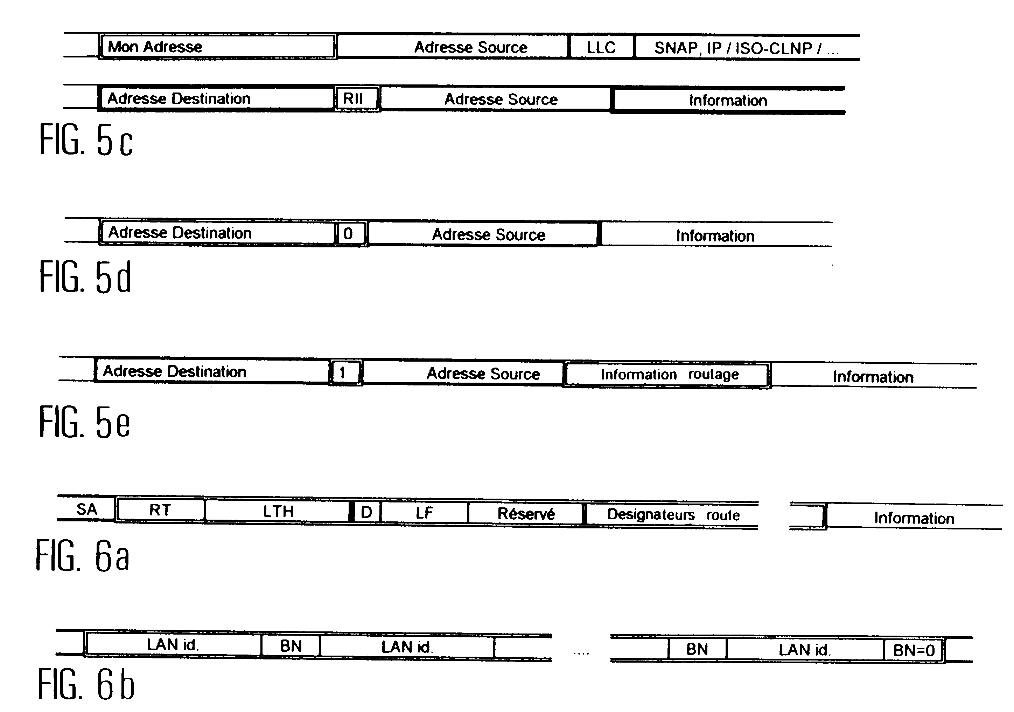

La figure 5.a représente le début d'une trame FDDI :

L'analyse débute sur le délimiteur de début de trame "SD" ("Start Delimiter") composé de la paire de symboles JK.

Les bits de format FF de l'octet "Frame Control" (FC) ou de contrôle de trame indiquent le format de la trame : "Void", Jeton, "SMT", propre au niveau MAC ou "LLC". Seules les trames du LLC (FF=01) sont susceptibles d'être routées.

Le bit L indique la longueur des adresses sources et destination qui suivent : 16 bits s'il est à 0, 48 bits s'il est à un. Suivant sa valeur on choisit un registre portier différent.

L'analyse de ces trois champs est câblée.

Les adresses MAC reconnues sont indiquées par un signal "Match" aux dispositifs gérant la couche MAC sur l'anneau FDDI pour pouvoir retirer de la circulation les trames correspondantes. Le traducteur leur apparaît comme une mémoire associative de grande capacité.

Il est possible d'interdire l'acheminement d'une trame dont l'adresse source ou destination a été marquée interdite.

Certaines adresses MAC de destination ont une signification particulière : elles n'impliquent pas le routage de la trame mais son traitement par le processeur du pont.

La figure 5b illustre une adresse MAC fonctionnelle

Une liste de ces adresses est donnée dans l'ouvrage intitulé "Assigned numbers" de J. Reynolds et J, Postel (RFC 1060, mars 1990). On peut citer comme exemple d'adresses MAC "bien connues" :

- 09-00-2B-00-00-03        pour "End System Hello" ;
- 09-00-2B-00-00-04        pour "intermediate System Hello" ;
- 01-80-C2-00-00-00        pour l'établissement et la mise à jour d'un arbre recouvrant sur l'ensemble des ponts.

Ces adresses qui impliquent un traitement par le processeur du pont-routeur soit parce que l'information contenue dans la trame lui est directement adressée, soit parce que des traitements plus complexes sont nécessaires avant l'acheminement de la trame seront appelées dans la suite "adresses fonctionnelles".

La reconnaissance de son adresse par le pont après analyse de l'adresse de destination entraîne une analyse ultérieure du champ information qui peut par exemple contenir une trame IP-DoD ou ISO-CLNP ("Connectionless Network Protocol") L'information d'acheminement ou l'indication d'un traitement particulier à effectuer par le processeur du pont-routeur ne pourra donc être fournie qu'après analyse successive d'en-têtes (LLC, puis SNAP, ISO CLNP, IP...) dans le champ information.

La figure 5c illustre l'analyse de l'adresse destination et de l'indicateur de routage par la source.

Le premier bit de l'adresse de source (RII) indique quand il est à 1 la présence d'un champ "Routing Information" (RI) destiné au routage par la source ("Source Routing") dans la zone d'information suivant l'adresse destination. L'information d'acheminement ne pourra donc être fournie qu'après analyse du champ "Routing Information" (RI) qui suit immédiatement l'adresse MAC source.

**Pont transparent ou routage par arbre recouvrant ("Spanning tree")**

La figure 5d illustre un pont transparent.

Si aucun des deux cas précédents n'est rencontré, l'acheminement est fourni par l'information associée à l'adresse MAC de destination si elle est présente. Les deux premiers bits de l'adresse destination indiquent le type d'adresse: : individuelle ou de groupe, (I/G); administrée localement ou universellement (U/L). Ils sont analysés par la mémoire TRIE comme le reste de l'adresse.

L'acheminement s'effectue sur un arbre recouvrant si l'adresse n'a pas été trouvée.

**Pont à routage par la source**

La figure 5e illustre une trame routée par la source.

La figure 6a illustre le champ "Routing Information".

Le champ "Routing Information" (Figure 6.a) est composé des champs RT, LTH, D, LF et d'une suite de désignateurs de route ("Route Designators").

RT indique le type de routage. Seules les trames du type "Specifically Routed Frames" (SRF, RT=0xx) ont un acheminement indiqué dans la zone "Route Designators". Les autres types ("All Route Explorer" ARE et "Spanning Tree Explorer" STE) servent aux systèmes d'extrémité à construire leurs propres tables de routage. Ces trames sont à traiter par le processeur du pont.

LTH indique la longueur en octets du champ Routing Information (Soit 2 plus la longueur de la zone Route Designators).

D indique la direction de la trame : D=0 pour une trame de l'origine vers l'extrémité et 0 en sens inverse par exemple pour une réponse de l'extrémité qui n'a aucun calcul de routage à effectuer mais simplement à inverser ce bit.

L'analyse du champ Ri dans l'adresse MAC source est câblée : c'est l'un des événements reconnus par l'automate d'enchaînement des différents types d'analyse.

L'analyse des champs RT et LTH est obtenue par consultation de la mémoire TRIE qui fournit les informations suivantes :

- une fonction pour les trames du type ARE ou STE ;
- une erreur si le champ LTH a une valeur incorrecte ;
- la durée précalculée en demi octets si la trame est du type SRF.

Le contenu du portier et des registres qui suivent pour l'analyse du champ Ri est établi à l'initialisation de la mémoire TRIE.

L'information d'acheminement est obtenue par analyse de la zone "Route Designators" qui décrit le chemin que doit suivre une trame du type SRF.

La figure 6b illustre un exemple de désignateurs de route.

Le chemin est décrit par la succession des liens empruntés (les identificateurs de LAN "LANid") et des noeuds traversés (les identificateurs de ponts "BN"). La signification du numéro de pont peut dépendre du couple d'identificateurs de LAN ("Local Area Network" ou RLE) qui l'encadre. Le dernier identificateur de pont est fixé à 0, il est là pour aligner la zone Route Designators sur une frontière d'octet.

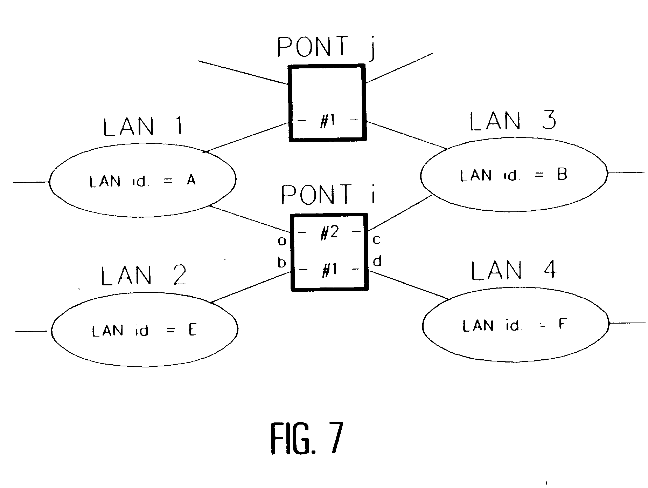

La figure 7 montre un exemple de réseau dans lequel les trames sont à acheminer en routage par la source.

Soit une trame échangée entre les réseaux locaux LAN 1 et LAN 3 au travers du pont i :

- le champ RD ne dépends pas du sens de l'échange ;
- un identificateur de LAN particulier ne peut apparaître qu'une seule fois ;
- seule les trames ou apparaît {A, #2, B}, sont à router par le pont i ;
- quand D=0, le pont i achemine les trames {A, #2, B} sur son port c ;
- quand D=1, le pont i achemine les trames {A, #2, B} sur son port a.

L'acheminement est établi par reconnaissance d'une séquence particulière {LANid., BN, LAN id.} dans le champ RD, par exemple dans le cas ci-dessus la séquence {E, 1, F} par le pont i.

La reconnaissance s'effectue de la manière suivante :

- tant qu'un premier identificateur de LAN n'a pas été reconnu, il faut ignorer l'identificateur de pont et recommencer la recherche ;
- dès qu'un identificateur de LAN a été reconnu, l'acheminement est obtenu après analyse de l'identificateur de pont et de l'identificateur de LAN qui suivent.

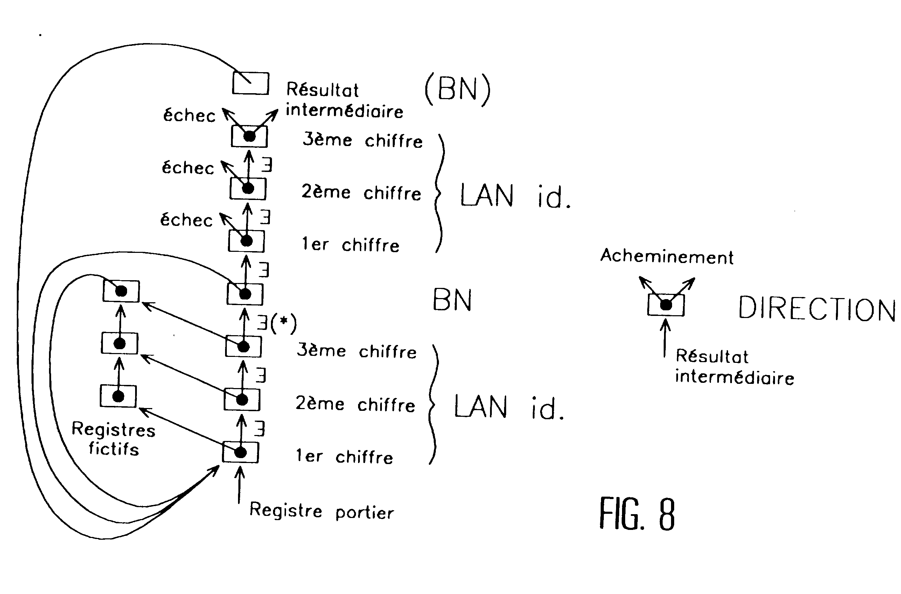

La condition "tant que" est obtenue par une programmation adaptée de la mémoire TRIE: un échec lors de l'analyse d'une des tranches d'un LANid. fait pointer vers des registres fictifs pointant soit vers le registre fictif suivant, soit pour le dernier (lu en même temps que l'identificateur de pont suivant) vers le portier pour recommencer la recherche. Les pointeurs vers les registres fictifs ont un type particulier. La figure 8 représente le trajet parcouru dans la mémoire lors d'une recherche de séquence dans le cas du routage par la source. Le contenu et la position des registres fictifs sont établis lors de la phase d'initialisation de la mémoire.

Sur cette figure, le signe ∃ traduit l'existence d'un pointeur.

L'acheminement dépend de la direction de la trame, il est obtenu à la fin de l'analyse par indirection sur le résultat intermédiaire stocké quand la séquence a été reconnue et indirection par le bit de direction enregistré au préalable.

Un même identificateur de LAN dans une séquence LANid, BN, LANid traversant celui-ci ne doit pas figurer plus d'une fois dans la suite des désignateurs de route. Si la trame n'est pas supprimée dans ce cas, le pont va la boucler et elle va se multiplier dans le réseau. Le procédé de l'invention ne permet pas de reconnaître une occurrence multiple du même identificateur mais l'apparition de plus de deux identificateurs de LAN raccordés au pont dans une route traversant celui-ci. Cette condition englobe la précédente et permet de plus de mettre en évidence des routes qui ne sont pas optimum. Un tel cas peut se produire si le réseau change de configuration par addition d'un LAN sur le pont alors que la source n'en est pas avertie.

Pour ce faire, la suite des désignateurs de route est examinée entièrement et le nombre de passages dans l'arête repérée par (*) dans la figure 8 est compté. Si celui-ci est ≥ à 2, la route boucle ou n'est pas optimale.

Le pont reconnaît une condition d'échec si l'acheminement est inexistant après reconnaissance d'une séquence LANid, BN. Ce cas peut se produire si le réseau change de configuration par retrait d'un LAN alors que la source n'en est pas avertie.

**Trames MAC adressées au pont-routeur**

Le traitement à effectuer ne peut être connu qu'après analyse du champ LLC ("Logical Link Control") et dans le cas de trames IP-DoD ou ISO-CLNP d'une partie de leur en-tête. Cette analyse, de profondeur et de longueur variables permet de reconnaître un protocole de niveau réseau mis en oeuvre dans le traducteur, un protocole à traiter par le processeur du pont-routeur ou encore les trames "TEST" et "XID" d'échange d'informations dans le niveau liaison de données.

La figure 9a illustre un LLC inconnu ou à traiter par le processeur du pont-routeur;
La figure 9b illustre l'identification d'une trame ARP à traiter par le processeur du pont-routeur.

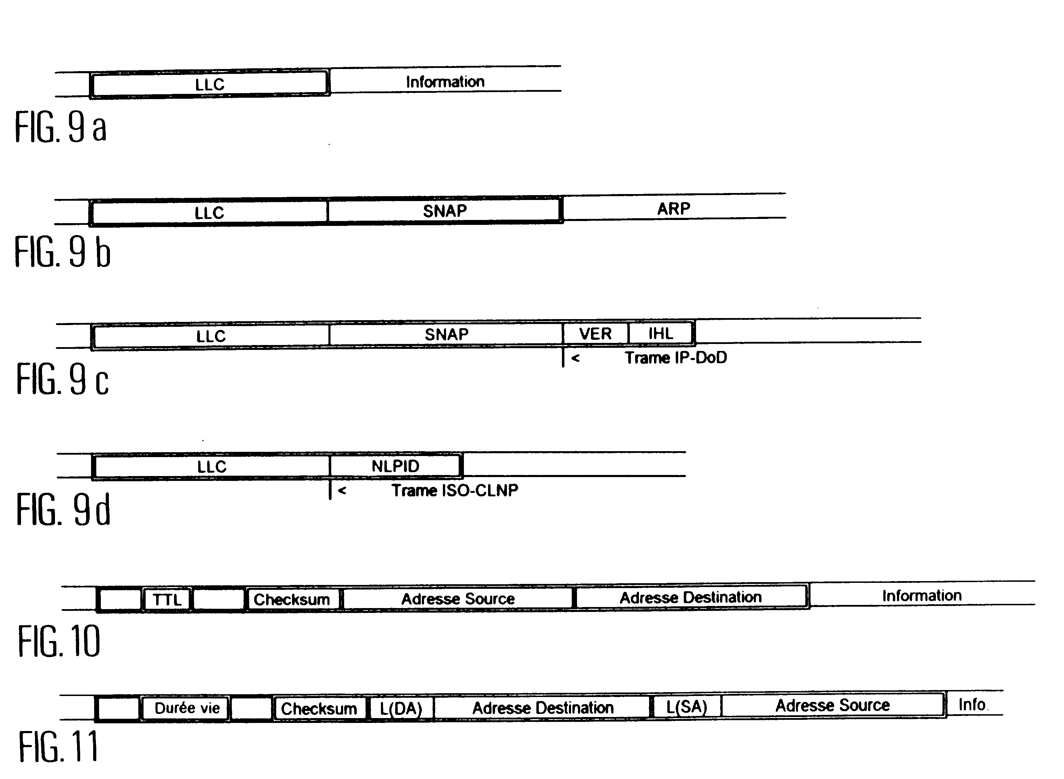

La figure 9c illustre une identification d'une trame IP-DoD.
La figure 9d illustre une identification d'une trame ISO-CLNP.

La consultation de la mémoire TRIE peut fournir suivant la succession d'octets reconnue:

- l'indication d'une valeur inconnue ;
- l'indication du traitement à effectuer par le processeur du pont-routeur, par exemple après reconnaissance d'une trame "XID" ou "TEST" signifiant que l'information qui suit est destinée à la gestion de la sous-couche LLC (figure 9.a) ou encore LLC, SNAP = AA-AA-03-00-00-00-08-06 signifiant que l'information qui suit est du type ARP (figure 9.b) ;
- l'indication du protocole à traiter à la suite notamment les protocoles de niveau réseau comme IP-DOD ou ISO CLNP ,
- la longueur exprimée en tranches des adresses réseau si celle-ci est déterminée uniquement par le type du protocole reconnu.

Le protocole IP-DoD est reconnu après la suite AA-AA-03-00-00-00-8a-00-45 (figure 9.c). Les huit premiers octets contiennent LLC et SNAP, le dernier appartient de fait au niveau réseau. Il indique la version (4) et la longueur de l'en-tête IP "IHL" (20 octets). Une valeur supérieure à 5 de la longueur signifie que l'en-tête contient des options qui ne peuvent être traitées que par le processeur du pont-routeur.

Le protocole ISO-CLNP est reconnu après la séquence FE-FE-03-81. Les trois premiers octets contiennent le LLC, le dernier appartient au niveau réseau, c'est l'identificateur de protocole de couche réseau "NLPID" (figure 9.d).

Ces séquences sont inscrites dans la mémoire TRIE, leur longueur est variable et il est même concevable d'identifier un même protocole de niveau réseau de plusieurs manières : par exemple IP-DoD à la suite de LLC, SNAP ou LLC, NLPID.

**Protocole IP-DOD**

La figure 10 illustre un en-tête DoD.

La version traitée est la version 4, sans options. La reconnaissance des trames ayant dépassé leur durée de vie est câblée (test du champ "Time to live" TTL = 0).

Il est possible d'interdire l'acheminement d'une trame dont l'adresse source ou destination a été marquée interdite.

La reconnaissance d'adresses particulières peut impliquer un traitement par le processeur du pont-routeur soit parce que l'information contenue dans la trame lui est directement adressée, soit parce que des traitements plus complexes sont nécessaires avant l'acheminement de la trame, de la même manière que pour les adresses MAC.

**Protocole ISO-CLNP**

La figure 11 illustre un en-tête ISO-CLNP.

Les traitements effectués sont semblables au cas précédent, à l'exception de la reconnaissance des adresses qui peuvent avoir une longueur quelconque indiquée dans deux champ L(DA), L(SA) préfixant adresse source et destination.

**Enchaînement des différents types d'analyse**

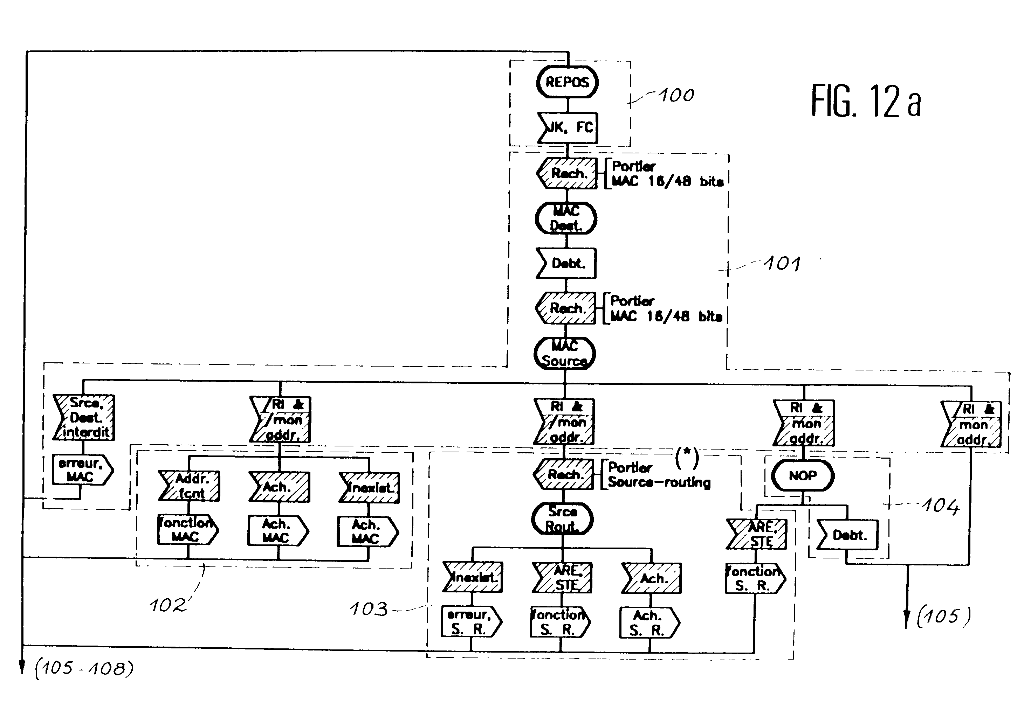

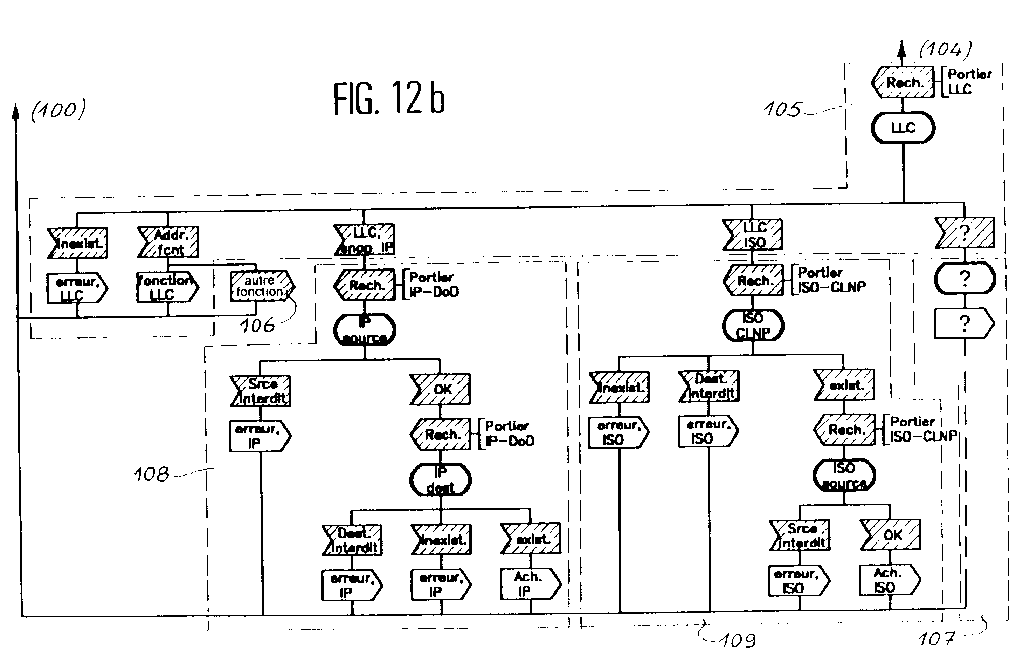

La figure 12 représente le diagramme d'états de l'automate réalisé.

Ce diagramme peut être décomposé en différents blocs suivants :

- bloc 100 d'initialisation ;
- bloc 101 d'analyse niveau MAC ;
- bloc 102 d'analyse MAC hors "source routing";
- bloc 103 d'analyse "source routing" ;

le pont étant adressé comme équipement d'interconnexion,

- bloc 104 d'analyse "source routing" ;
- bloc 105 d'analyse de LLC, le pont étant adressé comme équipement terminal ;
- bloc 106 point entrée pour protocole que l'on ne sait que partiellement traiter;
- bloc 107 protocole X par exemple XNS, IPX... (les "?" font référence à d'autres protocoles traités; il peut y avoir ainsi plusieurs protocoles supplémentaires) ;
- bloc 108 d'analyse IP-DOD ;
- bloc 109 d'analyse IP ISO ou CLNP ;

Il faut remarquer que la couche représentée par les blocs 101, 102 peut être remplacée par une ou plusieurs autres couches ou elle-même être décomposée en plusieurs couches.

L'événement "Debt" est le débordement d'une temporisation. Cette temporisation est lancée pour limiter le temps de recherche ou identifier des champs particuliers de la trame entrante. Sa valeur est soit câblée, soit déduite des informations reçues comme la longueur "LTH" dans les indications de routage par la source ou la longueur des adresses des trames ISO-CLNP.

L'événement "Erreur" interrompt dans tous les cas l'analyse en cours. Il peut provenir :

- d'un mauvais fonctionnement au niveau physique quand apparaît un symbole non valide;
- d'une valeur incorrecte d'un champ (par exemple la longueur d'adresse dans une en-tête ISO-CLNP);
- d'une adresse reconnue interdite(sauf pour les adresses MAC) ;
- de la détection d'une incohérence dans la consultation de la mémoire TRIE (aucun résultat n'a été trouvé avant la fin de la temporisation).

Les échanges avec la mémoire TRIE sont illustrés par des hachures.

Le type et le résultat de l'analyse sont indiqués au commutateur ou au processeur du pont-routeur lors du retour à l'état repos.

Les abréviations utilisées dans la figure 12 sont les suivantes:

| | |
|---|---|
| / : | négation; |
| & : | ET logique; |
| RI : | présence de l'indicateur de routage par la source ; |
| SR : | ("Source Routing"); |
| OK : | Adresse de source autorisée ou non trouvée; |
| Rech. : | Initialisation de la recherche dans la mémoire TRIE; |
| Ach. | Un acheminement a été reconnu ; |
| Addr. fcnt : | Une adresse fonctionnelle a été reconnue; |
| ? : | Extension possible à d'autres protocoles réseau; |
| (*) : | Deux portiers sont utilisés pour le routage par la source. |

Les types d'analyse et les opérations effectués sont les suivants :

* Analyse "MAC"

Les adresses sources et destination de longueur 16 (portier 1) ou 48 bits (portier 2) sont traduites en :

- acheminement, valeur ou
- adresse fonctionnelle, valeur.

Quand l'adresse de destination n'a pas été reconnue, une valeur d'acheminement par défaut est fournie correspondant à un arbre recouvrant (""Spanning Tree").

Une trame adressée au pont provoque la traduction du LLC et éventuellement de champs suivants si elle n'est pas routée par la source ou alors ni du type "All Route Explorer" (ARE), ni "Spanning Tree Explorer" (STE).
Les erreurs suivantes sont détectées:

- apparition d'un symbole non valide au cours de l'analyse;
- mémoire incohérente;
- adresse source interdite ;
- adresse destination interdite.

* Analyse Routage par la source ("Source Routing")

L'analyse du champ "Routing type" permet de fournir les indications suivantes pour les trames dont ni l'adresse MAC source ni l'adresse MAC destination ne sont interdites et qui ne sont pas adressées au pont:

- fonction à traiter par le processeur du pont-routeur si la trame est du type ARE ou STE ou
- acheminement après traduction par la mémoire TRIE (portier 2) de la suite de "Route Designators" si la trame est du type SRF et si elle n'est pas adressée au pont.

Les erreurs suivantes sont détectées :

- acheminement inexistant pour une trame du type SRF;
- identificateur de LAN dupliqué ou boucle ;
- apparition d'un symbole non valide au cours de l'analyse ;
- valeur incorrecte du champ "LTH" (impair, strictement inférieur à 6 pour une trame SRF ou strictement inférieur à 2 pour les trames ARE/STE).

* Analyse "LLC"

La traduction par la mémoire TRIE du LLC (et éventuellement d'une partie des champs suivants) (portier 3) des trames qui sont adressées au pont, dont l'adresse source n'est pas interdite et qui ne sont pas du type ARE ou STE permet de fournir les indications suivantes :

- l'analyse suivante à effectuer si la traduction du LLC et d'une partie de l'en-tête de la couche réseau a permis de reconnaître un protocole de niveau réseau mis en oeuvre ou
- une fonction à traiter par le processeur du pont-routeur après reconnaissance d'un LLC particulier ou d'un LLC et d'une partie des informations qui lui font suite.

Les erreurs suivantes sont détectées :

- apparition d'un symbole non valide au cours de l'analyse ;
- mémoire incohérente ;
- valeur inconnue du champ LLC ou des informations qui lui font suite.

Le câblage d'autres protocoles de niveau réseau est possible après traduction du LLC dans la mémoire TRIE.

* Analyse IP-DoD

Les en-têtes traduits sont ceux de la version 4 sans options (IHL = 5). Une longueur d'en tête strictement inférieure à 5 mots de 32 bits correspond à une erreur, décelée lors de l'analyse précédente ("LLC") ainsi qu'une valeur strictement supérieure à 5 qui exige un traitement par le processeur du pont-routeur.
Les adresses sources et destination de longueur 32 bits (portier 4) sont traduites en :

- acheminement, valeur ou
- adresse fonctionnelle, valeur.

Les erreurs suivantes sont détectées :

- apparition d'un symbole non valide au cours de l'analyse ;

- mémoire incohérente ;
- adresse destination inconnue ;
- adresse source interdite ;
- adresse destination interdite ;
- trame ayant dépassé sa durée de vie ;
- somme de contrôle incorrecte.

∗ Analyse IDO-CLNP

Les en-têtes traduites sont celles dont le protocole de couche réseau est actif (NLPID = 81). Les autres valeurs correspondent soit à une erreur soit par exemple aux protocoles "ES-IS" ou "IS-IS". Le traitement à effectuer par le processeur du pont-routeur est dans ce cas déterminé lors de l'analyse précédente ("LLC").
Les adresses sources et destination (portier 4) sont traduites en :

- acheminement, valeur ou
- adresse fonctionnelle, valeur.

L'en-tête de l'adresse ISO est le champ AFI ("Authority and Format Indicator"). Ce champ est analysé par la mémoire TRIE comme le reste de l'adresse. L'ensemble des registres intermédiaires atteint après traduction de AFI peut être vu comme un ensemble de portiers supplémentaires ou déjà existants dans le cas d'adresses MAC 48 bits ou IP-DoD.
Les erreurs suivantes sont détectées :

- apparition d'un symbole non valide au cours de l'analyse ;
- mémoire incohérente ;
- adresse destination inconnue ;
- adresse source interdite ;
- adresse destination interdite ;
- trame ayant dépassé sa durée de vie ;
- valeur incorrecte d'une longueur d'adresse (Longueur strictement inférieure à 2 ou strictement supérieure à 32 octets) ;
- longueur de l'en-tête strictement inférieure à 16.

**Codage du contenu de la mémoire TRIE**

La mémoire TRIE est écrite par le processeur du pont-routeur. Elle est lue par celui-ci mais surtout par la partie câblée du traducteur. L'adresse de lecture est obtenue par concaténation :

- d'une tranche (indexation) de la trame entrante ou d'une valeur stockée au préalable (par exemple le bit de direction d'une trame routée par la source) qui va adresser une cellule dans un registre ;
- de ce qui a été lu dans une cellule au cycle précédent (indirection) ou à l'initialisation de la recherche d'une valeur de portier pour adresser un registre ;
- ou d'un résultat intermédiaire stocké au préalable.

A titre indicatif, les portiers suivants peuvent être câblés :

- 1 pour les adresses MAC 16 bits ;
- 2 pour les adresses MAC 48 bits ;
- 3 pour les champs RT et LTH du routage par la source ;
- 4 pour la suite de désignateurs de route du routage par la source ;
- 5 pour le LLC ;
- 6 pour les adresses IP-DoD ;
- 7 pour les adresses ISO.

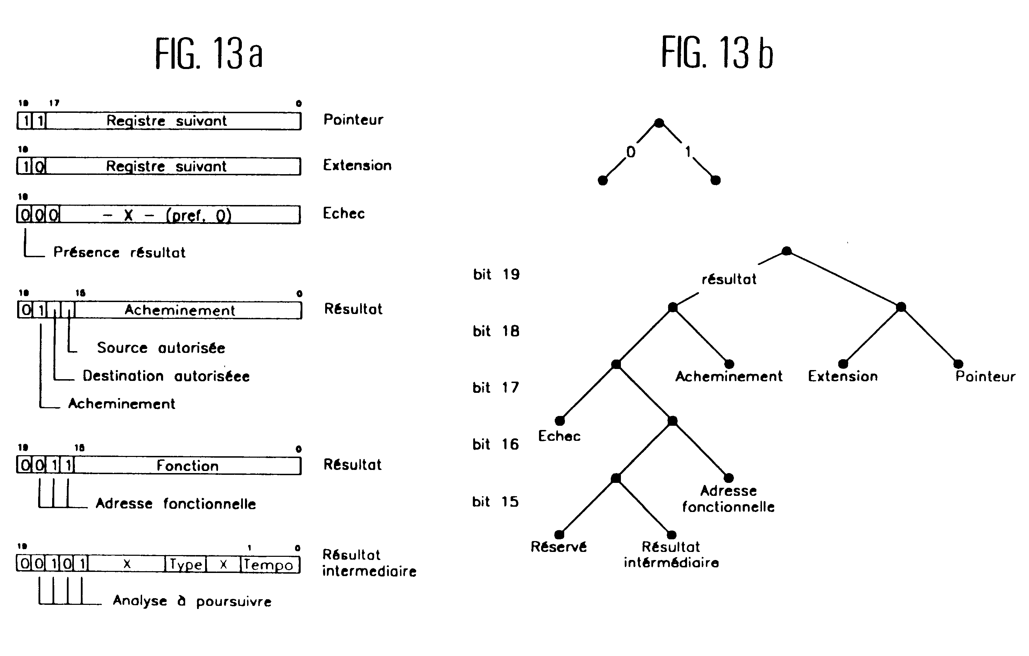

La figure 13a illustre le format du contenu de la mémoire TRIE en présentant six possibilités de codage des poids forts.
La lecture doit fournir à chaque cycle les informations suivantes :

- la recherche continue avec la tranche suivante, le contenu de la cellule est une valeur de registre sur 18 bits ;
- le registre suivant est un registre fictif ("extension");
- un résultat a été obtenu ;
- le résultat est un pointeur (résultat intermédiaire pour le routage par la source) ;
- la recherche est un échec ;
- le résultat est un acheminement avec deux attributs d'autorisation selon que l'adresse est en destination ou en source ;
- le résultat est une fonction à traiter par le processeur du pont-routeur (reconnaissance d'une adresse fonctionnelle) ;
- le résultat est un résultat intermédiaire, sa valeur indique le prochain traitement à effectuer (par exemple IP-DoD ou ISO-CLNP) ;
- une temporisation associée au résultat intermédiaire exprimée en tranche.

Le contenu est toujours placé dans les poids faibles et l'indication de son type dans les poids forts.

La figure 13a représente le format des mots, et la figure 13b représente l'arborescence sur les bits d'indication de type permettant à la fois de rendre maximum la longueur du résultat pour l'acheminement, l'indirection ou l'indirection avec extension et de rendre minimum le nombre de bits à traiter pour connaître le type d'opération à effectuer.

L'agencement de l'arbre représenté sur la figure 13b, pourrait, bien évidemment, être réalisé autrement.

Avec une longueur de mot de 20 bits, la capacité d'adressage est de $2^{18}$ registres et le volume mémoire peut donc atteindre 4M permettant le stockage de plus de 23000 adresses MAC 48 bits.

D'autres valeurs pourraient bien évidemment être retenues.

### Vérification des sommes de contrôle

Les en têtes de niveau réseau (IP-DoD ou ISO CLNP) ont un champ de somme de contrôle pour détecter si elles n'ont pas été affectées d'erreur(s). La tâche de vérification est très coûteuse en temps pour les processeurs des ponts. C'est une tâche simple qui peut être câblée.

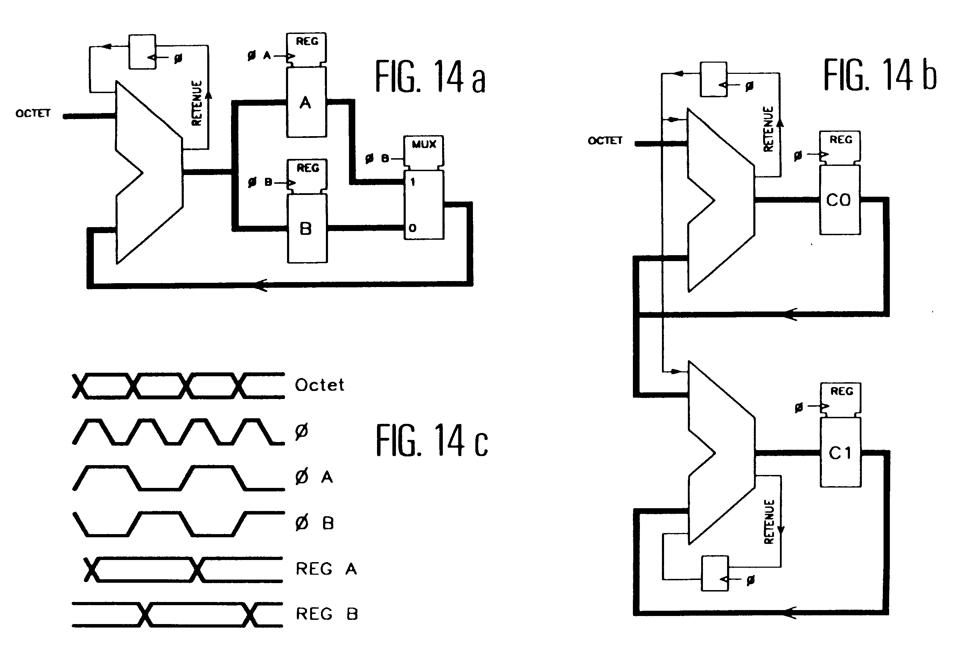

La figure 14 illustre le calcul des sommes de contrôle :

- la figure 14a : dans le cas du calcul FCS IP DoD;
- la figure 14b : dans le cas du calcul FCS ISO CLNP ;
- la figure 14c : les chronogrammes.

Sur la figure 14a un additionneur reçoit sur huit premières entrées l'octet à analyser. Les huit sorties sont reliées à un premier registre A et à un second registre B dont les sorties respectives sont reliées aux deux entrées 0 et 1 d'un multiplexeur qui a ses sorties reliées aux secondes entrées de l'additionneur. La sortie retenue de l'additionneur est reliée à l'entrée retenue de celui-ci au travers d'un troisième registre qui reçoit une horloge $\phi$. Le premier registre A reçoit une horloge $\phi$A, le second registre B et le multiplexeur reçoivent une horloge $\phi$B. Le multiplexeur est tel que lorsque $\phi$B égale 0, les signaux présents sur les entrées 0 se retrouvent en sortie, et lorsque $\phi$B égale 1, les signaux présents sur les entrées 1 se retrouvent en sortie.

Sur la figure 14b, un premier additionneur reçoit sur ses premières entrées l'octet à analyser. Les sorties de cet additionneur sont entrées sur un premier registre Co dont les sorties sont envoyées sur les secondes entrées du premier additionneur et aux premières entrées d'un second additionneur. Les sorties du second additionneur sont entrées sur un second registre C1 dont les sorties sont reliées aux secondes entrées du second additionneur.

La sortie retenue du premier additionneur est reliée à la première entrée retenue du premier et du second additionneurs au travers d'un troisième registre. La sortie retenue du second additionneur est reliée à la seconde entrée retenue de ce second au travers d'un quatrième registre. Les quatre registres reçoivent une même horloge $\phi$.

#### * Somme de contrôle IP-DoD

Le champ "checksum" ou total de contrôle est obtenu par inversion des bits du résultat sur 16 bits de la somme modulo $2^{16}$-1 de tous les mots de 16 bits de l'en-tête.

La vérification s'effectue en additionnant modulo $2^{16}$-1 tous les mots de 16 bits de l'en-tête (donc y compris le checksum). Le résultat de cette addition doit être FFFF en hexadécimal s'il n'y a pas eu d'erreur.

L'addition peut être effectuée octet par octet, sans tenir compte de leur ordre (octet de poids fort ou de poids faible en tête) ni de leur représentation (bit de poids fort ou bit de poids faible en tête). Il suffit simplement de propager la retenue vers le registre accumulateur suivant.

La figure 14a représente l'architecture de l'accumulateur. Phi est l'horloge octet, PhiA et PhiB sont les horloges décalées des deux registres de 8 bits contenant chacun la moitié de la somme de contrôle. Le contenu de chaque registre est présenté alternativement à l'entrée de l'additionneur en même temps que le nouvel octet reçu.

La retenue est rebouclée sur l'additionneur :

- au premier demi mot de 16 bits, c'est une retenue normale, des poids faibles vers les poids forts ;
- au second demi mot, c'est une retenue des poids forts vers les poids faibles du mot suivant pour réaliser l'addition modulo $2^{16}$-1.

* Somme de contrôle ISO-CLNP

Le champ "checksum" fait aussi 16 bits mais son calcul et sa vérification sont différents : deux octets $C_0$, $C_1$ sont calculés à chaque octet de l'en-tête en arithmétique modulo $2^8$-1 (une en-tête ISO CLNP ne fait pas nécessairement un nombre entier de mots de 16 bits). La vérification s'effectue comme suit:

- le premier octet $C_0$ est la somme modulo $2^8$-1 de tous les octets Oi de l'en-tête : $C_0 = C_0 + Oi$ ;
- le deuxième octet $C_1$ est la somme modulo $2^8$-1 de tous les octets $C_0$, pour chaque octet Oi : $C_1 = C_1 + C_0$ ;
- à la fin de la vérification, $C_0$ et $C_1$ doivent avoir la valeur 0 modulo $2^8$-1.

La figure 14.b représente l'architecture des deux accumulateurs. Les retenues sont bouclées des poids forts vers les poids faibles pour réaliser l'addition modulo $2^8$-1. Les registres C0, C1 sont mis à jour à chaque nouvel octet avec la même horloge Phi. L'additionneur de l'accumulateur C1 a deux entrées retenue: l'une en cas de débordement du registre C0, l'autre en cas de débordement sur lui-même.

**Architecture matérielle du traducteur de l'invention**

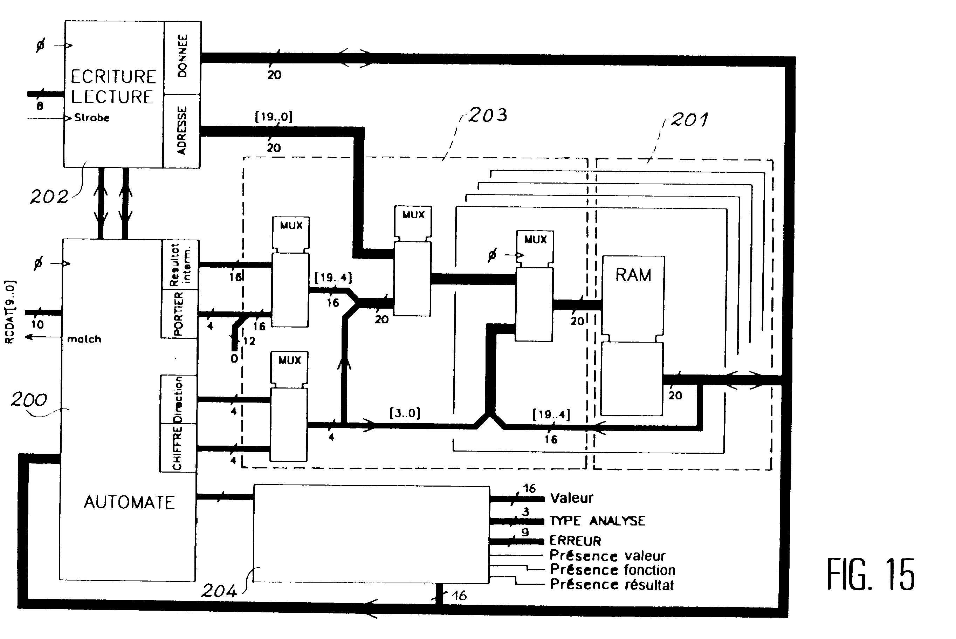

La figure 15 illustre l'architecture matérielle du traducteur.
Ce traducteur comprend les différents modules suivants :

- un automate 200 ;
- une mémoire RAM 201 ;
- un module de commande d'écriture-lecture 202 permettant de lire et écrire dans la mémoire RAM, de participer à l'arbitrage RAM-automate et éventuellement de paramétrer l'automate.

Les différentes sorties de l'automate correspondant aux résultats intermédiaires, au portier, à la direction et à la tranche, ainsi que les sorties adresse du module d'écriture-lecture sont reliées à la mémoire RAM au travers d'un chemin de donnée 203 représenté ici par plusieurs multiplexeurs.

D'autres sorties de l'automate sont reliées à un module résultat 204 qui est pour partie lu dans la mémoire et pour partie dans l'automate et délivre des signaux correspondant à la valeur, le type d'analyse, l'erreur, la présence valeur, la présence fonction et la présence résultat.

Les accès données du module d'écriture-lecture et de l'automate sont reliées à la mémoire RAM.
Les interfaces avec le reste d'un système traitant le niveau physique FDDI peuvent être :

- les signaux d'entrée "RCDAT[9..0] issus d'un composant ainsi que les horloges correspondantes (symbole à 25 MHz et octet à 12,5 MHz) ;
- le signal "match" pour indiquer au composant traitant le niveau MAC la reconnaissance d'une adresse de niveau MAC pour qu'il puisse la retirer de l'anneau ("Stripping") ;
- le résultat de l'analyse sous la forme :

  . acheminement ou fonction sur 16 bits,
  . type d'analyse effectué sur 3 bits,
  . indication d'erreur sur 9 bits (un bit par type d'erreur),
  . indication d'acheminement,
  . indication de fonction ;

- un accès pour la mise à jour de la mémoire TRIE.

Sur les figures 13 et 15, les adresses et données TRIE sont réalisées avec 20 bits, mais il serait, bien entendu, possible de les réaliser avec un autre nombre de bits.

Dans une réalisation avantageuse, le traducteur est réalisé en deux parties :

- le premier sous-ensemble réalise le cycle d'indirection-indexation et regroupe les mémoires et les multiplexeurs d'adresse. Les multiplexeurs ont à la fois une fonction de registre et d'amplificateur sur le bus d'adresse. Ce bus est adapté en impédance et les mémoires et multiplexeurs sont en boîtier miniature montés en surface sur les deux faces de la carte pour réduire la longueur des bus ;
- tous les autres sous-ensembles peuvent être réalisés dans un réseau logique programmable.

Un logiciel de mise à jour de la mémoire TRIE, capable de gérer plusieurs traducteurs correspondant à des ports physiques différents, a un volume d'environ 2000 lignes en langage C dont 10% pour les opérations de base comme ajouter ou retirer une adresse ou modifier ses attributs.

Dans une architecture générique d'application au cas d'un équipement intermédiaire de type commutateur de paquets, l'équipement d'interconnexion est organisé autour d'un dispositif qui permet l'échange d'information entre les différents modules d'accès composés de trois parties (adaptation au dispositif d'échange, relais et adaptation à l'interface considérée (LAN, MAN ou WAN).

Un module de gestion permet l'usage du dispositif complet. Il traite aussi les tâches de traitement des trames définies par le système comme n'ayant pas une contrainte de temps trop forte (au regard du dispositif ou de son usage). Par exemple, les trames d'échange de tables ou de détermination de route ayant des constantes de temps de l'ordre de quelques secondes à quelques dizaines voire centaines de secondes peuvent être dans ce cas.

Le dispositif de l'invention peut être placé au plus près d'une interface LAN (fonction adaptation LAN ou relais LAN), il peut même avoir des interactions avec les composants gérant le MAC (cas du signal match pour le FDDI). Dans le cas de WAN, il est soit à l'interface, soit utilisable de façon partagée par plusieurs interfaces dans un usage de type serveur.

Dans l'un des deux modes, il peut être partagé entre plusieurs interfaces. Le nombre de ces dernières est déterminé en tenant compte des contraintes de performances désirées (transparent, retard introduit par rapport à la solution optimale, ...).

Le dispositif de l'invention peut être facilement utilisé à d'autres fins que l'acheminement de structures de données à haut débit; il peut notamment :

- servir de base à des dispositifs de sécurité réalisant des filtrages d'adresse ;
- faciliter la réalisation de dispositifs d'observation, de comptage ou de mesure de trafic basé sur les informations analysées au vol ?

TABLEAU I

| Niveau physique | VP, VC entrant | Port, VP, VC sortant |
|---|---|---|
| | | Commande du commutateur (signalisation, administration) |
| | | Niveau MAC câblé |
| Niveau MAC | Adresse MAC destination | Port, VP, VC sortant |
| | | Commande du pont (signalisation, administration) |
| | | Identification du protocole réseau |
| | "source routing" | Port, VP, VC sortant |
| | | Commande du pont |
| Identification du protocole réseau | LLC, ... | Commande du routeur (signalisation, administration) |
| | | Niveau réseau câblé |
| Niveau réseau | adresse destination | Port, VP, VC sortant ou @ MAC destination |
| | | Commande du routeur (adresse, signalisation, administration) |

**Revendications**

1. Procédé d'analyse, en tout ou partie, d'informations contenues dans des structures de données pour fournir à un système externe les informations nécessaires à l'acheminement desdites structures de données ou à leur traitement par un système externe intelligent, dans lequel on analyse des champs significatifs desdites structures de données, notamment les adresses de source ou de destination, en utilisant le principe des tables de traduction par indirections successives dans un tableau à deux dimensions TRIE (i, j), chaque ligne du tableau constituant un registre à $2^k$ cellules où k est la longueur de la tranche adressée, caractérisé en ce que la recherche dans les tables de traduction est effectuée au rythme de l'information entrante, par tranches de structures de données, de manière à débuter la recherche avant d'avoir reçu complètement la structure de données, le contenu d'une cellule permettant, après une durée égale à quelques tranches de données, d'adresser le registre suivant, ou d'indiquer si la recherche a échoué, ou de fournir une information de fonctionnement pour un système externe intelligent, ou une valeur, notamment pour l'acheminement, associée au contenu de la structure de donnée active, en ce que l'on fournit les informations à un automate associé, et en ce que l'on traite à la fois les informations de contrôle du protocole et les informations d'adressage du protocole.

2. Procédé selon la revendication 1, caractérisé en ce qu'on peut faire plusieurs analyses successives, une même table pouvant être utilisée pour plusieurs types de recherche en utilisant des chemins différents, par exemple en commençant les recherches par des registres portiers différents.

3. Procédé selon la revendication 1, caractérisé en ce qu'on sait exclure de la recherche toute partie connexe ou non de la structure de donnée, sans contrainte d'alignement du champ ou d'une sous-partie de la partie testée sur une frontière de tranche, et sans rompre le processus de recherche.

4. Procédé selon l'une quelconque des revendications précédentes, caractérisé en ce que les structures de donnée sont acheminées par routage par la source.

5. Procédé selon la revendication 4, caractérisé en ce que la trame routée par la source comprend un champ "routing information" composé de plusieurs champs, dont un champ RT indiquant le type de routage, et un champ LTH indiquant la longueur en octets du champ "routing information", et d'une suite de désignateurs de route, et en ce que l'analyse des champs RT et LTH est obtenue par consultation de la mémoire TRIE qui fournit les informations suivantes :

   - une fonction pour les trames du type ARE ou STE qui servent aux systèmes d'extrémité à construire leurs propres tables de routage ;
   - une erreur si le champ LTH a une valeur incorrecte ;
   - la durée précalculée en tranches si la trame est du type SRF.

6. Procédé selon la revendication 5, caractérisé en ce que l'information d'acheminement est obtenue par analyse de la zone "désignateurs de route" qui décrit le chemin que doit suivre une trame, le chemin étant décrit par la succession des liens empruntés (identificateurs de LAN "LANid") et des noeuds traversés (identificateurs de ponts "BN").

7. Procédé selon la revendication 6, caractérisé- en ce que l'acheminement est établi par reconnaissance d'une séquence particulière (LANID., BN, LANid) dans un champ RD, la reconnaissance s'effectuant de la manière suivante :

   - tant qu'un premier identificateur de LAN n'a pas été reconnu, on ignore l'identificateur de pont et on recommence la recherche
   - dès qu'un identificateur de LAN a été reconnu, l'acheminement est obtenu après analyse de l'identificateur de pont et de l'identificateur de LAN qui suivent;

   la condition "tant que" étant obtenue par une programmation adaptée de la mémoire TRIE: un échec lors de l'analyse d'une des tranches d'un LANid. faisant pointer vers des registres fictifs pointant soit vers le registre fictif suivant, soit pour le dernier vers le portier pour recommencer la recherche.

8. Procédé selon la revendication 7, caractérisé en ce que l'acheminement, qui dépend de la direction de la trame, est obtenu à la fin de l'analyse par indirection sur le résultat intermédiaire stocké quand la séquence a été reconnue et par indexation par un bit de direction enregistré au préalable.

9.  Procédé selon la revendication 7, caractérisé en ce qu'un même identificateur de LAN, dans une séquence LANid, BN, LANid traversant celui-ci, figurant plus d'une fois dans la suite des désignateurs de route est détecté.

10. Dispositif pour l'analyse d'informations contenues dans des structures de données pour fournir à un système externe les informations nécessaires à l'acheminement desdites structures de données ou à leur traitement par un système externe intelligent, caractérisé en ce qu'il comprend :

    -   un automate ;
    -   une mémoire RAM ;
    -   un module de commande d'écriture-lecture permettant d'écrire et de lire dans la mémoire RAM, de participer à l'arbitrage RAM-automate, et éventuellement de paramétrer l'automate, en ce que les différentes sorties de l'automate, correspondant aux résultats intermédiaires, au portier, à la direction et à la tranche, ainsi que les sorties adresse du module de commande d'écriture-lecture sont reliées à la mémoire RAM au travers d'un chemin de donnée, en ce que d'autres sorties de l'automate sont reliées à un module résultat qui est pour partie lu dans la mémoire et pour partie dans l'automate et délivre des signaux correspondant à la valeur, au type d'analyse, une erreur éventuelle, à la présence valeur, à la présence fonction et à la présence résultat et en ce que les accès données du module de commande d'écriture-lecture et de l'automate sont reliées à la mémoire RAM.

11. Dispositif selon la revendication 10, caractérisé en ce qu'il comprend un module de vérification de différents types de "checksum".

12. Dispositif selon la revendication 11, caractérisé en ce que ce module de vérification de checksum comprend un additionneur qui reçoit sur huit premières entrées l'octet à analyser, ses huit sorties étant reliées à un premier registre (A) et à un second registre (B) dont les sorties respectives sont reliées aux deux entrées 0 et 1 d'un multiplexeur qui a ses sorties reliées aux secondes entrées de l'additionneur, en ce que la sortie retenue de l'additionneur est reliée à la troisième entrée retenue de celui-ci au travers d'un troisième registre qui reçoit une horloge $\phi$, et en ce que le premier registre (A) reçoit une horloge $\phi$A, le second registre (B) et le multiplexeur reçoivent une horloge $\phi$B.

13. Dispositif selon la revendication 11, caractérisé en ce que le module de vérification de "checksum" comprend un premier additionneur qui reçoit sur ses premières entrées l'octet à analyser, les sorties de cet additionneur étant entrées sur un premier registre (Co) dont les sorties sont envoyées sur les secondes entrées du premier additionneur et aux premières entrées d'un second additionneur, en ce que les sorties du second additionneur sont entrées sur un second registre (C1) dont les sorties sont reliées aux secondes entrées du second additionneur et en ce que la sortie retenue du premier additionneur est reliée à la première entrée retenue du premier et du second additionneur au travers d'un troisième registre, et la sortie retenue de second additionneur est reliée à la seconde entrée retenue de ce second additionneur au travers d'un quatrième registre, les quatre registres recevant une même horloge $\phi$.

14. Dispositif selon l'une quelconque des revendications 10 à 13, caractérisé en ce qu'il est utilisé dans une application à un commutateur de structure de données ou à un pont routeur présentant notamment un interface FDDI.

15. Dispositif selon l'une quelconque des revendications 10 à 13, caractérisé en ce qu'il est utilisé dans une application à des dispositifs de sécurité réalisant des filtrages d'adresse.

16. Dispositif selon l'une quelconque des revendications 10 à 13, caractérisé en ce qu'il est utilisé dans une application à des dispositifs d'observation, de comptage ou de mesure de trafic basé sur les informations analysées au vol.

**Patentansprüche**

1.  Verfahren zur Auswertung, vollständig oder teilweise, von Informationen, die in Datenstrukturen enthalten sind, um einem äußeren System die Informationen zu liefern, die für die Wegewahl der genannten Datenstrukturen oder ihre Verarbeitung durch ein äußeres, intelligentes System notwendig sind, in dem man signifikante Felder der genannten Datenstrukturen auswertet, insbesondere die Quellen- oder Zieladresse, indem das Prinzip von Übersetzungstabellen durch aufeinanderfolgendes Leiten in einer zweidimensionalen Tabelle TRIE (i, j) verwendet wird, wobei jede Zeile der Tabelle ein Register mit $2^k$ bildet, wo k die Länge des adressierten Abschnitts ist, **dadurch gekennzeichnet,** daß der Suchvorgang in diesen Übersetzungstabellen im Takt der ankommenden Information nach Datenstrukturabschnitten derart ausgeführt wird, daß der Suchvorgang beginnt, bevor die Datenstruktur vollständig erhalten worden ist, wobei der Inhalt einer Zelle nach einer Dauer, die gleich einigen Datenabschnitten ist, erlaubt, das folgende Register zu adressieren oder anzugeben, wenn der Suchvorgang fehlgeschlagen hat, oder eine Betriebsinformation für ein äußeres intelligentes System zu liefem oder einen Wert, insbesondere für die Wegewahl, der mit dem Inhalt der aktiven Datenstruktur verbunden ist, daß man die Information einem verbundenen Automaten liefert und daß man gleichzeitig die Steuerinformationen des Protokolls und die Adressierungsinformationen des Protokolls verarbeitet.

2. Verfahren gemäß Anspruch 1, **dadurch gekennzeichnet,** daß man mehrere aufeinanderfolgende Auswertungen machen kann, wobei eine selbe Tabelle für mehrere Arten Suchvorgänge verwendet werden kann, indem unterschiedliche Wege verwendet werden, wobei z.B. mit Suchvorgängen mit unterschiedlichen Eingangsregistern begonnen wird.

3. Verfahren gemäß Anspruch 1, **dadurch gekennzeichnet,** daß man aus dem Suchvorgang jeden zusammenhängenden oder nicht verbundenen Teil der Datenstruktur ohne Ausrichtungsbeschränkung des Feldes oder eines Unterteils des an einer Grenze des Abschnitts geprüften Teils ausschließen kann, und ohne das Suchverfahren abzubrechen.

4. Verfahren gemäß einem der vorhergehenden Ansprüche, **dadurch gekennzeichnet,** daß die Datenstrukturen durch Leitweglenkung durch die Quelle befördert werden.

5. Verfahren gemäß Anspruch 4, **dadurch gekennzeichnet,** daß der durch die Quelle weitergeleitete Rahmen ein Feld "Weiterleitinformation" umfaßt, das aus mehreren Feldem, von denen ein Feld RT die Art der Leitweglenkung angibt und ein Feld LTH die Länge des Feldes "Weiterleitinformation" in Oktetts angibt, und einer Folge von Wegbezeichnern zusammengesetzt ist, und daß die Auswertungen der Felder RT und LTH durch Anfrage bei dem Speicher TRIE erhalten wird, der die folgenden Informationen liefert:

- eine Funktlon für die Rahmen vom Typ ARE oder STE, die den Endsystemen dienen, ihre richtigen Leitweglenkungstabellen zu konstruieren;

- einen Fehler, wenn das Feld LTH einen falschen Wert hat;

- die im voraus berechnete Dauer in Abschnitten, wenn der Rahmen vom Typ SRF ist.

6. Verfahren gemäß Anspruch 5, **dadurch gekennzeichnet,** daß die Wegewahlinformation durch Auswertung der Zone "Wegbezeichner" erhalten wird, die den Weg beschreibt, dem ein Rahmen folgen soll, wobei der Weg durch die Aufeinanderfolge angenommener Verbindungen (Kennungen des LAN "LANid") und durchlaufener Knoten (Kennungen der Leitstelle "BN") beschrieben wird.

7. Verfahren gemäß Anspruch 6, **dadurch gekennzeichnet,** daß die Wegewahl durch Erkennung einer bestimmten Folge (LANID, BN, LANid) in einem Feld RD hergestellt wird, wobei die Erkennung in der folgenden Weise ausgeführt wird:

- sobald eine erste Kennung des LAN nicht erkannt worden ist, bleibt die Kennung der Schnittstelle unberücksichtigt und man beginnt den Suchvorgang wieder;

- sobald eine Kennung des LAN erkannt worden ist, wird die Wegewahl nach Auswertung der Kennung der Schnittstelle und der Kennung des LAN erhalten, die folgen;

- die Bedingung "sobald" wird durch eine an den Speicher TRIE angepaßte Programmierung erhalten: ein Fehlschlag bei der Auswertung einer der Abschnitte einer LANid läßt auf flktive Register zeigen, die entweder auf das folgende fiktive Register oder für das letzte auf den Eingang zeigen, um mit dem Suchvorgang erneut zu beginnen.

8. Verfahren gemäß Anspruch 7, **dadurch gekennzeichnet,** daß die Wegewahl, die von der Richtung des Rahmens abhängt, am Ende der Auswertung durch indirekte Lenkung zu dem gespeicherten Zwischenergebnis erhalten wird, wenn die Folge erkannt worden ist, und durch Indexierung durch ein im voraus aufgezeichnetes Richtungsbit.

9. Verfahren gemäß Anspruch 7, **dadurch gekennzeichnet,** daß dieselbe Kennung des LAN, die in einer Folge LANid, BN, LANid, die es durchquert, mehr als einmal in der Folge der Wegbezeichner auftritt, erfaßt wird.

10. Vorrichtung zur Auswertung von Informationen, die in Datenstrukturen enthalten sind, um einem äußeren System die Informationen zu liefern, die für die Wegewahl der genannten Datenstrukturen oder zu ihrer Verarbeitung durch ein äußeres, intelligentes System notwendig sind, **dadurch gekennzeichnet,** daß sie umfaßt:

- einen Automaten:
- einen Speicher RAM;
- einen Schreib-Lese-Befehlsmodul, der ermöglicht, in den Speicher RAM zu schreiben und aus ihm zu lesen, an der Arbitrierung RAM-Automat teilzunehmen und gegebenenfalls den Automaten zu parametrisieren, daß die verschiedenen Ausgänge des Automaten, die den Zwischenergebnissen, dem Eingang, der Richtung und dem Abschnitt entsprechen, sowie die Adressenausgänge des Schreib-Lese-Steuermoduls mit dem Speicher RAM über einen gegebenen Weg verbunden sind, daß andere Ausgänge des Automaten mit einem Ergebnismodul verbunden sind, der teilweise in den Speicher und teilweise in den Automaten gelesen wird und Signale liefert, die dem Wert, der Art der Auswertung, einem möglichen Fehler, dem Gegenwartswert, der Gegenwartsfunktion und dem Gegenwartsergebnis entsprechen, und daß die Datenzugriffe des Schreib-Lese-Befehlsmoduls und des Automaten mit dem Speicher RAM verbunden sind.

11. Vorrichtung nach Anspruch 10, **dadurch gekennzeichnet,** daß sie einen Prüfmodul für verschieden Arten von "Prüfsummen" umfaßt.

12. Vorrichtung nach Anspruch 11, **dadurch gekennzeichnet,** daß dieser Prüfmodul der Prüfsumme einen Addierer umfaßt, der an acht ersten Eingängen das auszuwertende Oktetts empfängt, seine acht Ausgänge mit einem ersten Register (A) und einem zweiten Register (B) verbunden sind, deren jeweiligen Ausgänge jeweils mit zwei Eingängen 0 und 1 eines Multiplexers verbunden sind, dessen Ausgänge mit den zweiten Eingängen des Addierers verbunden sind, daß der Übertragsausgang des Addierers mit dem dritten Übertragseingang von ihm über ein drittes Register verbunden ist, das einen Takt $\phi$ erhält, und daß das erste Register (A) einen Takt $\phi$A erhält und das zweite Register (B) und der Multiplexer einen Takt $\phi$B erhalten.

13. Vorrichtung gemäß Anspruch 11, **dadurch gekennzeichnet,** daß der Prüfmodul der "Prüfsumme" einen ersten Addierer umfaßt, der an seinen ersten Eingängen das aufzuwertende Oktett erhält, die Ausgänge dieses Addierers in ein erstes Register (Co) eingegeben werden, dessen Ausgänge zu den zweiten Eingängen des ersten Addierers und zu den ersten Eingängen eines zweiten Addierers geschickt werden, daß die Ausgänge des zweiten Addierers einem zweiten Register (C1) eingegeben werden, dessen Ausgänge mit den zweiten Eingängen des zweiten Addierers verbunden sind, und daß der Übertragsausgang des ersten Addierers mit dem ersten Übertragseingang des ersten und des zweiten Addierers über ein drittes Register verbunden ist, und der Übertragsausgang des zweiten Addierers mit dem zweiten Übertragseingang dieses zweiten Addierers über ein viertes Register verbunden ist, wobei die viert Register denselben Takt $\phi$ erhalten.

14. Vorrichtung gemäß Irgendeinem der Ansprüche 10 bis 13, **dadurch gekennzeichnet,** daß sie bei einer Anwendung bei einem Schalter von Datenstrukturen oder einer Schnittstelle verwendet wird, die insbesondere eine Schnittstelle FDDI darstellt.

15. Vorrichtung gemäß irgendeinem der Ansprüche 10 bis 13, **dadurch gekennzeichnet,** daß sie bei einer Anwendung bei Sicherheitsvorrichtungen verwendet wird, die eine Adressenfilterung vornehmen.

16. Vorrichtung gemäß irgendeinem der Ansprüche 10 bis 13, **dadurch gekennzeichnet,** daß sie bei einer Anwendung bei Vorrichtungen zur Beobachtung, zum Zählen oder zum Messen des Verkehrs auf der Grundlage von im Moment ausgewerteten Informationen verwendet wird.

**Claims**

1. Process for the analysis of all or part of the informations contained in data structures in order to supply to an external system the informations necessary for the dispatching of said data structures or for their processing by an intelligent external system in which analysis takes place of the significant fields of said data structures, particularly the source or destination addresses, using the principle of translation tables by successive indirections in a two-dimensional array TRIE (i, j), each line of the table constituting a register with $2^k$ cells, in which k is the length of the addressed segment, wherein the search in the translation tables takes place at the clock cycle of the entering information by data structure segments, in such a way as to start the search before having completely received the data structure, the content of a cell making it possible, after a time equal to a few data segments, to address the following segment, or to indicate if the search has failed, or supply an operating information for an intelligent external system, or a value, particularly for dispatching, associated with the content of the active data structure, wherein the informations are supplied to an associated automaton and wherein the check informations of the protocol and the addressing informations of the protocol are both processed.

2. Process according to claim 1, wherein several successive analyses can be carried out and the same table can be used for several search types using different paths, e.g. by commencing the searches with different gate registers.

3. Process according to claim 1, wherein it is possible to exclude from the search any ancillary or non-ancillary part of the data structure, without alignment constraint of the field or a subpart of that part which is tested on the segment frontier and without interrupting the search process.

4. Process according to any one of the preceding claims, wherein the data structures are dispatched by source routing.

5. Process according to claim 4, wherein the source routed frame comprises a routing information field constituted by several fields, including a RT field indicating the routing type and a LTH field indicating the length in bytes of the routing information field, and a sequence of route designators and wherein the analysis of the RT and LTH fields is obtained by consulting the TRIE memory which supplies a function for the frames of the ARE or STE type used by the end systems for producing their own routing tables, an error if the LTH field has an incorrect value and the duration precalculated in segments if the frame is of the SRF type.

6. Process according to claim 5, wherein the dispatching information is obtained by the analysis of the route designator zone, which describes the path which must be followed by a frame, the path being described by the succession of links taken (LAN identifiers LANid) and the traversed nodes (bridge identifiers BN).

7. Process according to claim 6, wherein dispatching is established by the recognition of a particular sequence (LANID., BN, LANid) in a RD field, recognition taking place in such a way that until a first LAN identifier has been recognized, the bridge identifier is ignored and the search is recommenced, as soon as a LAN identifier has been recognized, dispatching is obtained after analysis of the bridge identifier and the LAN identifier which follow, the "until" condition being obtained by an adapted programming of the TRIE memory: a failure during the analysis of one of the segments of a LANid pointing towards the dummy registers pointing either towards the following dummy register, or for the last towards the gate register in order to recommence the search.

8. Process according to claim 7, wherein the dispatching, which is dependent on the frame direction, is obtained at the end of analysis by indirection on the stored intermediate result when the sequence has been recognized and by indexing by a direction bit recorded beforehand.

9. Process according to claim 7, wherein the same LAN identifier in a LANid, BN, LANid sequence traversing the latter appearing more than once in the route designator sequence is detected.

10. Apparatus for the analysis of informations contained in the data structures in order to supply an external system with informations necessary for the dispatching of said data structures or for their processing by an intelligent external system comprising:

- an automaton,
- a RAM memory
- a read - write control module making it possible to read and write into the RAM, participate in RAM - automaton arbitration and optionally to parametrize the automaton, the different outputs of the automaton, corresponding to the intermediate results, to the gate register, to the direction and to the segment, as well as the address outputs of the read - write control module being connected to the RAM across a data path, the other outputs of the automaton being connected to a result module which is partly read in the memory and partly in the automaton and which supplies signals corresponding to the value, the analysis type, a possible error, the presence value, the presence function and the presence result and the data accesses of the read - write control module and the automaton are connected to the RAM.

11. Apparatus according to claim 10, characterized in that it comprises a module for the verification of the different check sum types.

12. Apparatus according to claim 11, characterized in that said check sum verification module comprises an adder receiving on eight first inputs the byte to be analyzed, its eight outputs being connected to a first register (A) and to a second register (B), whose respective outputs are connected to the two inputs 0 and 1 of a multiplexer, whose outputs are connected to the second inputs of the adder, that the carry output of the adder is connected to the third carry input of the latter across a third register receiving a clock $\phi$ and that the first register (A) receives a clock $\phi A$, the second register (B) and the multiplexer a clock $\phi B$.

13. Apparatus according to claim 11, characterized in that the check sum verification module comprises a first adder receiving on its first inputs the byte to be analyzed, the outputs of said adder being inputted on a first register (Co), whose outputs are delivered to the second inputs of the first adder and to the first inputs of a second adder, that the outputs of the second adder are inputted on a second register (C1), whose outputs are connected to the second inputs of the second adder and that the carry output of the first adder is connected to the first carry input of the first and second adders across a third register, and the carry output of the second adder is connected to the second carry input of said second adder across a fourth register, the four registers receiving the same clock $\phi$.

14. Apparatus according to any one of the claims 10 to 13, characterized in that it is used in an application to a data structure switch or to a routing bridge having a FDDI interface.

15. Apparatus according to any one of the claims 10 to 13, characterized in that it is used in an application to security devices performing address filtering.

16. Apparatus according to any one of the claims 10 to 13, characterized in that it is used in an application to traffic measurement, counting and observation devices based on informations analyzed in movement.

FIG. 1

FIG. 2a

FIG. 2b

FIG. 3a

FIG. 3b

FIG. 3c

| A1 | A2 | ..... | Ai | ..... | AK |

**FIG. 4a**

| $T_{cy}$ | | | | | |

**FIG. 4b**

| $T_{cy}$ | | | | | |

**FIG. 4c**

| délimiteur de début | Contrôle trame | Adresse Destination | Adresse Source | Information |

**FIG. 5a**

| Adresse Destination fctelle | Adresse Source | Information |

**FIG. 5b**

EP 0 639 013 B1

| Mon Adresse | Adresse Source | LLC | SNAP, IP / ISO-CLNP / ... |

**FIG. 5 c**

| Adresse Destination | RII | Adresse Source | Information |

**FIG. 5 c**

| Adresse Destination | 0 | Adresse Source | Information |

**FIG. 5 d**

| Adresse Destination | 1 | Adresse Source | Information routage | Information |

**FIG. 5 e**

| SA | RT | LTH | D | LF | Réservé | Designateurs route | | Information |

**FIG. 6 a**

| LAN id. | BN | LAN id. | | .... | | BN | LAN id. | BN=0 |

**FIG. 6 b**

EP 0 639 013 B1

FIG. 7

FIG. 8

EP 0 639 013 B1

| LLC | Information |
|-----|-------------|

FIG. 9 a

| LLC | SNAP | ARP |
|-----|------|-----|

FIG. 9 b

| LLC | SNAP | VER | IHL |
|-----|------|-----|-----|

< Trame IP-DoD

FIG. 9 c

| LLC | NLPID |
|-----|-------|

< Trame ISO-CLNP

FIG. 9 d

| | TTL | | Checksum | Adresse Source | Adresse Destination | Information |
|---|-----|---|----------|----------------|---------------------|-------------|

FIG. 10

| | Durée vie | | Checksum | L(DA) | Adresse Destination | L(SA) | Adresse Source | Info. |
|---|-----------|---|----------|-------|---------------------|-------|----------------|-------|

FIG. 11

FIG. 12a

FIG. 12 b

EP 0 639 013 B1

# FIG. 13a

EP 0 639 013 B1

| 19 | 17 | | 0 |
|---|---|---|---|
| 1 | 1 | Registre suivant | |

Pointeur

| 19 | | | 0 |
|---|---|---|---|
| 1 | 0 | Registre suivant | |

Extension

| 19 | | | 0 |
|---|---|---|---|
| 0 | 0 | 0 | – X – (pref. 0) |

Echec

└─ Présence résultat

| 19 | | | 16 | | 0 |
|---|---|---|---|---|---|
| 0 | 1 | | | Acheminement | |

Résultat

└─ Source autorisée
└─ Destination autoriséee
└─ Acheminement

| 19 | | 16 | | 0 |
|---|---|---|---|---|
| 0 | 0 | 1 | 1 | Fonction |

Résultat

└─ Adresse fonctionnelle

| 19 | | | | | | 1 | 0 |
|---|---|---|---|---|---|---|---|
| 0 | 0 | 1 | 0 | 1 | X | Type | X | Tempo |

Résultat intermediaire

└─ Analyse à poursuivre

# FIG. 13b

bit 19      résultat

bit 18

bit 17      Acheminement     Extension     Pointeur

bit 16    Echec

bit 15    Réservé    Résultat intérmédiaire     Adresse fonctionnelle

35

FIG. 14 a

FIG. 14 b

FIG. 14 c

OCTET

RETENUE

ø A    REG

A

ø B    REG

B

MUX

ø B

1

0

Octet

ø

ø A

ø B

REG A

REG B

OCTET

RETENUE

ø

REG

C0

ø

REG

C1

RETENUE

ø

EP 0 639 013 B1

FIG. 15

ECRITURE LECTURE

ø

8

Strobe

DONNEE

ADRESSE

202

200

ø

RCDAT[9..0]

10

match

Resultat interm.

PORTIER

CHIFFRE Direction

AUTOMATE

20

[19..0]

20

203

201

MUX

MUX

MUX

ø

RAM

16

[19..4]

16

20

20

20

4

16

12

0

MUX

4

4

[3..0]

4

[19..4]

16

204

16

Valeur

TYPE ANALYSE

ERREUR

Présence valeur

Présence fonction

Présence résultat

16

3

9

EP 0 639 013 B1